(19) Europäisches Patentamt
European Patent Office
Office européen des brevets

(11) **EP 3 859 268 B1**

(12) **EUROPEAN PATENT SPECIFICATION**

(45) Date of publication and mention
of the grant of the patent:
**26.04.2023 Bulletin 2023/17**

(21) Application number: **19865949.2**

(22) Date of filing: **19.09.2019**

(51) International Patent Classification (IPC):
**G01B 11/02** (2006.01)    **G01B 11/24** (2006.01)
**G06T 7/62** (2017.01)

(52) Cooperative Patent Classification (CPC):
**G06T 7/62; G01B 11/02; G01B 11/24;**
G06T 2207/10024; G06T 2207/10028

(86) International application number:
**PCT/JP2019/036811**

(87) International publication number:
**WO 2020/066847 (02.04.2020 Gazette 2020/14)**

(54) **MEASUREMENT DEVICE AND MEASUREMENT METHOD**

MESSVORRICHTUNG UND MESSVERFAHREN

DISPOSITIF DE MESURE ET PROCÉDÉ DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2018 JP 2018185332**

(43) Date of publication of application:
**04.08.2021 Bulletin 2021/31**

(73) Proprietor: **Panasonic Intellectual Property
Management Co., Ltd.
Osaka-shi, Osaka 540-6207 (JP)**

(72) Inventors:
• **FUJIWARA Hikaru
Chuo-ku, Osaka-shi
Osaka 540-6207 (JP)**
• **HATSUDA Ken
Chuo-ku, Osaka-shi
Osaka 540-6207 (JP)**
• **TEZUKA Shota
Chuo-ku, Osaka-shi
Osaka 540-6207 (JP)**
• **UEDA Miyu
Chuo-ku, Osaka-shi
Osaka 540-6207 (JP)**
• **YASUNAGA Takuya
Chuo-ku, Osaka-shi
Osaka 540-6207 (JP)**

(74) Representative: **Grünecker Patent- und
Rechtsanwälte
PartG mbB
Leopoldstraße 4
80802 München (DE)**

(56) References cited:
DE-A1-102015 216 595    JP-A- 2014 109 464
JP-A- 2016 210 586    JP-A- 2017 191 605
JP-A- 2018 054 438    US-A1- 2016 370 220
US-A1- 2017 336 195

**Description**

TECHNICAL FIELD

The present disclosure relates to a measurement device and a measurement method which measure dimensions of an object.

BACKGROUND ART

JP 2017-191605 A discloses a handheld dimensioning device comprising a depth camera and a processor for determining the dimensions of a cargo formed by an object placed on a platform.

PTL 1 discloses a dimension measurement device that measures dimensions of a cargo placed on a platform or a cargo attached with a platform. This dimension measurement device transmits a measurement wave, receives the measurement wave that is reflected, and generates a distance image. The dimension measurement device individually generates a cargo distance image that includes the cargo and the platform and a background distance image that does not include the cargo or the platform. Based on a difference between the cargo distance image and the background distance image, the dimension measurement device generates a distance image showing a shape of the cargo or the cargo attached with the platform. This makes it possible for the dimension measurement device to appropriately measure the dimensions of the cargo or the cargo attached with the platform.

Citation List

Patent Literature

PTL 1: WO 2016/199366

SUMMARY OF THE INVENTION

The present disclosure provides a measurement device and a measurement method which accurately measure an object including a platform and a load placed on the platform.

A measurement device according to the present disclosure is a measurement device that measures a size of an outer shape of an object, the object including a platform present on a floor surface and a load placed on the platform. The measurement device includes: an acquisition unit that acquires depth information indicating distances from a reference position to the floor surface and the object; a storage that stores standard dimension information indicating a standard size of the platform; a controller that measures width, depth, and height dimensions of the object by identifying the platform based on the depth information and the standard dimension information, and generates measurement information indicating the measured width, depth, and height dimensions; and an output unit that outputs the measurement information.

These general and specific aspects may be achieved by a system, a method, and a computer program, and any combination of these.

A measurement method according to the present disclosure is a measurement method for measuring a size of an outer shape of an object, the object including a platform present on a floor surface and a load placed on the platform. The measurement method includes: a step of acquiring depth information indicating distances from a reference position to the floor surface and the object; a step of acquiring standard dimension information indicating a standard size of the platform; a step of measuring width, depth, and height dimensions of the object by identifying the platform based on the depth information and the standard dimension information, and generating measurement information indicating the width, depth, and height dimensions measured in the measuring; and a step of outputting the measurement information generated in the generating.

The measurement device and the measurement method in the present disclosure measure the width, depth, and height dimensions of the object by identifying the platform based on the depth information indicating the distance from the reference position to the object including the platform present on the floor surface and the load placed on the platform and based on the standard dimension information indicating the standard size of the platform. Thus, the outer shape of the object including the platform and the load placed on the platform can be accurately measured.

BRIEF DESCRIPTION OF DRAWINGS

FIG. 1 is a front view of a measurement device.

FIG. 2 is a back view of the measurement device.

FIG. 3 is a block diagram illustrating an electrical configuration of a measurement device of a first exemplary embodiment.

FIG. 4 is a view for explaining photography of a pallet and a load by the measurement device.

FIG. 5 is a view illustrating an example of a depth image.

FIG. 6 is a block diagram illustrating a functional configuration of the measurement device according to the first exemplary embodiment.

FIG. 7 is a diagram illustrating an example of standard dimension information.

FIG. 8 is a flowchart illustrating an operation of the measurement device according to the first exemplary embodiment.

FIG. 9 is a diagram illustrating an example of measurement information.

FIG. 10 is a diagram illustrating an example of an output of the measurement information.

FIG. 11 is a flowchart illustrating a generation operation of a floor surface equation according to the first exemplary embodiment.

FIG. 12 is a diagram for explaining a lower side proximity region in a depth image according to the first exemplary embodiment.

FIG. 13 is a flowchart illustrating an estimation operation of a pallet according to the first exemplary embodiment.

FIG. 14 is a diagram for explaining the estimation operation of the pallet according to the first exemplary embodiment.

FIG. 15 is a flowchart illustrating an estimation operation of a height of a load according to the first exemplary embodiment.

FIG. 16 is a diagram for explaining the estimation operation of the height of the load according to the first exemplary embodiment.

FIG. 17A is a diagram illustrating an example of a pallet having corner cut portions according to the first exemplary embodiment.

FIG. 17B is a diagram for explaining calculation of a nearest point when such a corner cut portion is present according to the first exemplary embodiment.

FIG. 18 is a flowchart illustrating an estimation operation of a pallet according to a second exemplary embodiment.

FIG. 19 is a diagram for explaining the estimation operation of the pallet according to the second exemplary embodiment.

FIG. 20 is a block diagram illustrating a configuration of a measurement device according to a third embodiment.

FIG. 21 is a flowchart illustrating an operation of the measurement device according to the third exemplary embodiment.

FIG. 22 is a diagram for explaining contour detection of an object according to the third exemplary embodiment.

FIG. 23 is a flowchart illustrating a generation operation of a floor surface equation according to the third exemplary embodiment.

FIG. 24 is a flowchart illustrating an estimation operation of a pallet according to the third exemplary embodiment.

FIG. 25 is a flowchart illustrating an estimation operation of a height of a load according to the third exemplary embodiment.

FIG. 26 is a block diagram illustrating a configuration of a measurement device according to a fourth exemplary embodiment.

FIG. 27 is a flowchart illustrating a generation operation of a floor surface equation according to the fourth exemplary embodiment.

FIG. 28 is a flowchart illustrating a generation operation of a floor surface equation according to a fifth exemplary embodiment.

## DESCRIPTION OF EMBODIMENTS

Exemplary embodiments will be described below in detail with appropriate reference to the drawings. However, detailed descriptions more than necessary may be omitted. For example, a detailed description of a matter which is already well-known, or a repetitive description for a substantially identical configuration may be omitted. Such omissions are made in order to avoid unnecessary redundancy of the following description and to facilitate the understanding of those skilled in the art. The inventors provide the accompanying drawings and the following description to help those skilled in the art sufficiently understand the present disclosure, and therefore have no intention to put any limitation by those drawings and description on subject matters described in claims.

(Knowledge underlying the present disclosure)

A pallet is used as a platform for placing a load thereon in logistics and the like. A region occupied by the load placed on the pallet in a warehouse, a truck, or the like has dimensions in which a bottom area is a pallet size and a total height is the sum of heights of the pallet and the load placed on the pallet. Hence, it is necessary to measure not only the dimensions of the load placed on the pallet but also the entirety of the pallet and the load placed on the pallet. In order to photograph, by a depth camera, the entirety of the pallet and the load placed on the pallet, it is necessary to photograph the entirety of the pallet and the load from a distance such that the entirety of the pallet and the load can be photographed. However, photographing from a distant distance increases noise in depth information obtained from the depth camera, and decreases accuracy of the depth information. In particular, some pallets for use in logistics and the like are slatted, and the pallets are provided with insertion holes for forklifts. In addition, the load on such a pallet comes in various colors and materials. For example, in the case of using the infrared active stereo method, it is difficult to detect a depth in a gap, an uneven portion, a black material, and the like, and missing of data is likely to occur in the depth information. Hence, it has been impossible to obtain accurate depth information, and it has been impossible to accurately measure the dimensions of the pallet and the load.

A measurement device of the present disclosure accurately measures a width and depth of the pallet and a height from a floor surface to a highest point of the load. Specifically, the measurement device of the present disclosure uses standard dimension information, which indicates a standard size of the pallet, together with the depth information obtained by photographing the pallet and the load. The size of the pallet for use in logistics and the like is standardized to several types in each country, region, or the like. Hence, by using the standard dimension information together with the depth information, the type of pallet can be identified accurately, and it is possible to accurately measure the width and depth of the pallet and the height from the floor surface to the highest point of the load. Thus, even when the accuracy of the depth information is not good, it is possible to perform the accurate measurement. Moreover, even when the load placed on the pallet is smaller than a bottom area of the pallet, it is possible to accurately measure the region occupied by the load placed on the pallet. The measurement device of the present disclosure will be described below in detail.

(First exemplary embodiment)

A first exemplary embodiment will be described below with reference to the drawings.

1. Configuration of measurement device

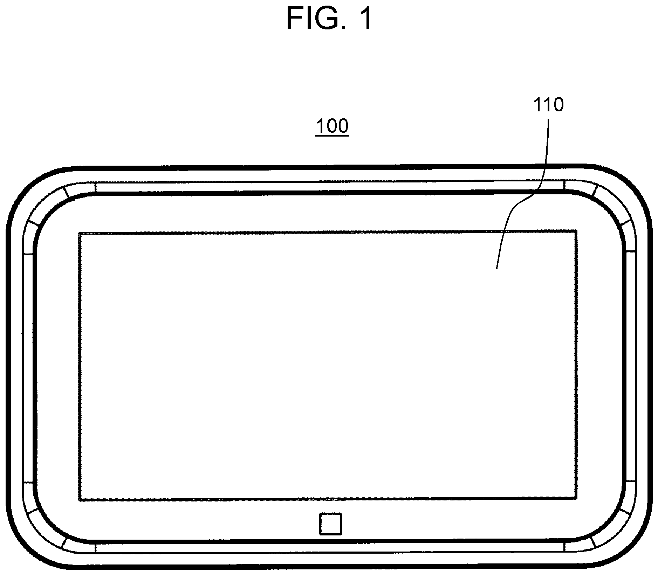

A configuration of a measurement device of the present exemplary embodiment will be described with reference to FIGS. 1 to 7.

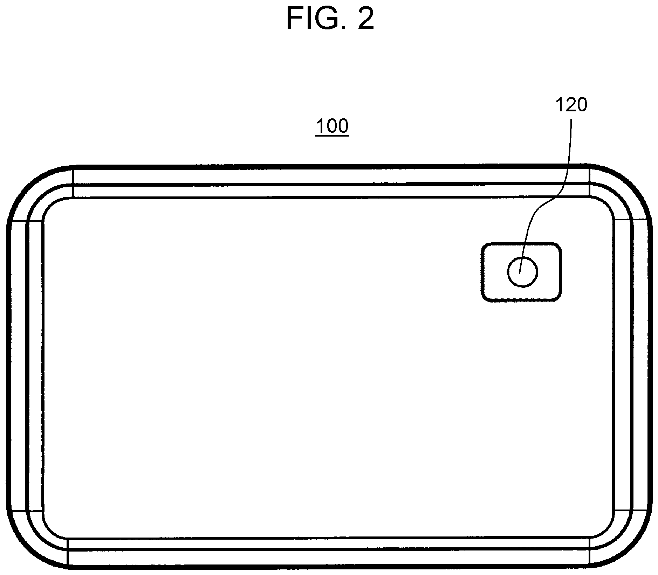

FIG. 1 is a front view of the measurement device according to the first exemplary embodiment. FIG. 2 is a back view of the measurement device according to the first exemplary embodiment. Measurement device 100 is, for example, a tablet-type personal computer. Measurement device 100 includes touch screen 110 on a front side thereof, and includes depth camera 120 on a back side thereof.

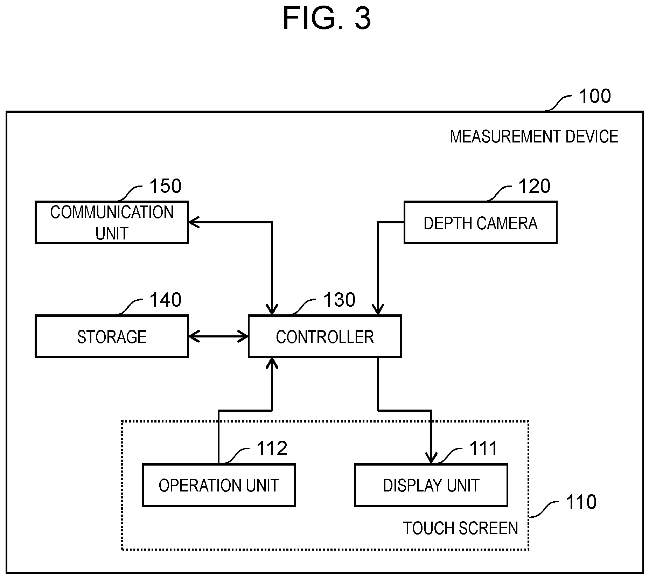

FIG. 3 is a block diagram illustrating an electrical configuration of the measurement device according to the first exemplary embodiment. Measurement device 100 includes controller 130, storage 140, and communication unit 150 in addition to touch screen 110 and depth camera 120.

Touch screen 110 includes display unit 111 and operation unit 112. Display unit 111 is configured with, for example, a liquid crystal display or an organic electroluminescence (EL) display. Operation unit 112 is a user interface that receives a variety of operations by a user. In the present exemplary embodiment, operation unit 112 is a touch panel provided on the surface of display unit 111. Operation unit 112 detects a touch operation by a user's finger or a pointing device such as a pen. Operation unit 112 includes, for example, an electrode film. For example, controller 130 measures a change in voltage or a change in electrostatic capacity, which is caused by the fact that the finger or the pointing device comes into contact with operation unit 112, and can thereby identify a contact position of the finger or the pointing device. Note that operation unit 112 may be configured with a keyboard, buttons, switches, or any combination of these as well as the touch panel.

Depth camera 120 generates depth information indicating a distance from a reference position to a subject. Specifically, depth camera 120 measures the distance to the subject, and generates a depth image in which the measured distance is indicated by a depth value for each pixel. Depth camera 120 is, for example, an infrared active stereo camera. In the present exemplary embodiment, the subject includes a floor surface, a pallet put on the floor surface, and a load placed on the pallet. Depth camera 120 is configured by implementing various known techniques such as an active stereo system and a time of flight (TOF) system. For example, measurement device 100 may include two depth cameras 120, in which case the distance may be calculated based on a parallax of two images. Measurement device 100 may include one depth camera 120, in which case the distance may be calculated from a time taken for emitted infrared rays to hit an object and for the reflected light to return. Depth camera 120 corresponds to an acquisition unit that acquires depth information indicating distances from the reference position to the floor surface and the object.

Controller 130 is configurable with a semiconductor element or the like. Controller 130 can be configured with, for example, a microcomputer, a central processing unit (CPU), a micro processing unit (MPU), a graphics processing unit (GPU), a digital signal processor (DSP), a field programmable gate array (FPGA), or an application specific integrated circuit (ASIC). Functions of controller 130 may be implemented only by hardware or may be implemented by a combination of hardware and software. Controller 130 reads out data and programs stored in storage 140 to perform various arithmetic processing, and thus implements predetermined functions.

Storage 140 is a storage medium that stores a program and data necessary to achieve functions of measurement device 100. Storage 140 can be configured with, for example, a hard disk (HDD), a solid state drive (SSD), a random access memory (RAM), a dynamic RAM (DRAM), a ferroelectric memory, a flash memory, a magnetic disk, or any combination of these.

Communication unit 150 includes a circuit that communicates with an external device in accordance with a predetermined communication standard. The predetermined communication standard is, for example, a local area network (LAN), Wi-Fi (registered trademark), Bluetooth (registered trademark), a universal serial bus (USB), and HDMI (registered trademark).

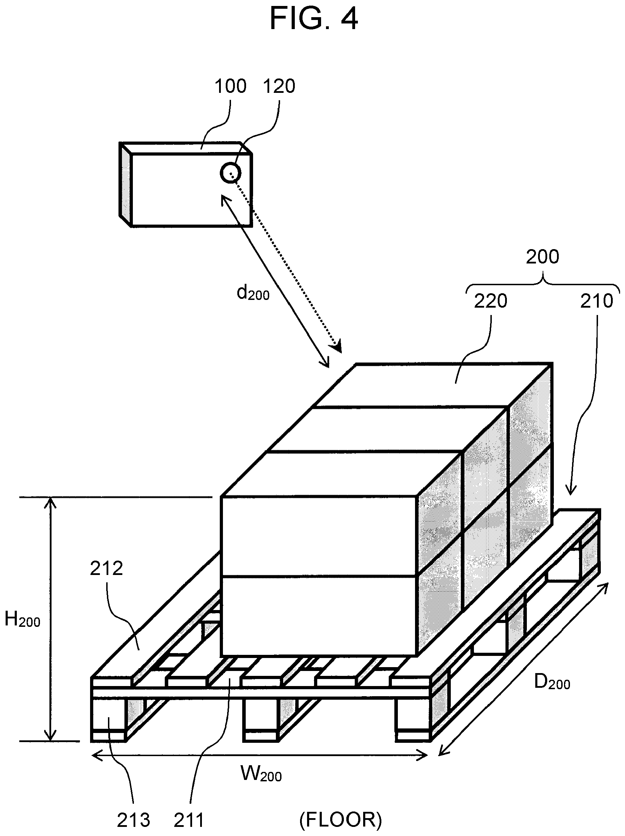

FIG. 4 schematically illustrates photography of object 200 by measurement device 100. Object 200 includes pallet 210 present on the floor surface and load 220 placed on pallet 210. Depth camera 120 measures distance d200 from depth camera 120 to object 200 with a position of depth camera 120 taken as a reference position, and generates a depth image.

Measurement device 100 calculates width W200, depth D200, and height H200 of object 200 with reference to the depth image. Width W200 and depth D200 of object 200 are a width and depth of pallet 210. Height H200 of object 200 is a height of a highest point of load 220 from the floor surface.

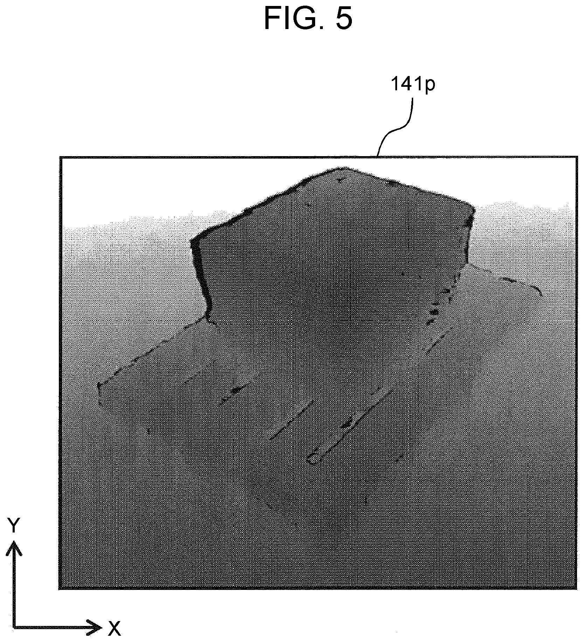

FIG. 5 shows an example of depth image 141p generated by depth camera 120. Depth image 141p represents a depth value for each pixel identified by two-dimensional coordinates (X, Y). Since the purpose of the present exemplary embodiment is to measure object 200, depth camera 120 photographs object 200 from an obliquely upward angle such that the full lengths of two sides of pallet 210 are photographed in depth image 141p as shown in FIGS. 4 and 5. Thus, the floor surface is reflected at least on a lower side of a screen of depth image 141p.

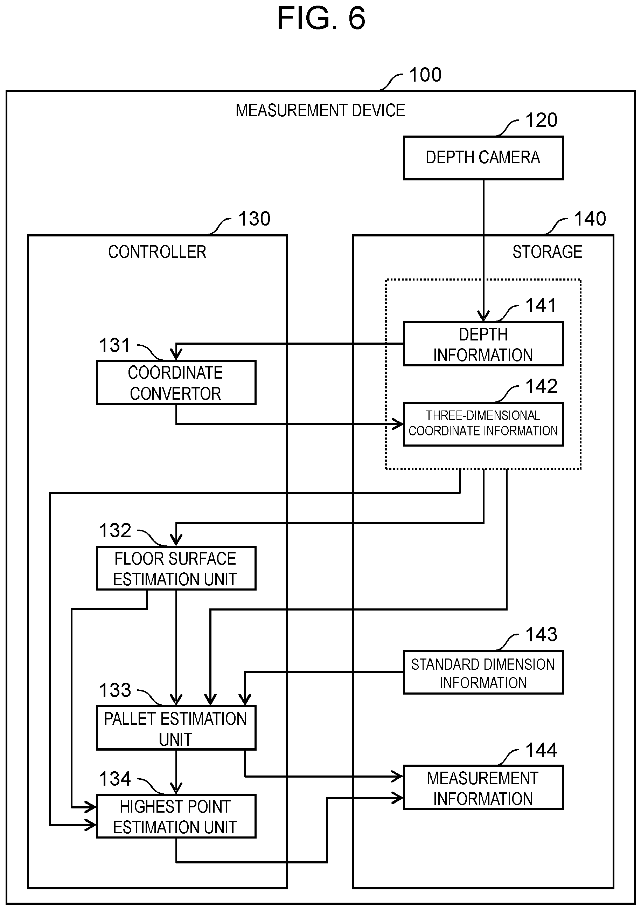

FIG. 6 is a block diagram illustrating a functional configuration of measurement device 100. Controller 130 includes, as the functional configuration, coordinate convertor 131, floor surface estimation unit 132, pallet estimation unit 133, and highest point estimation unit 134.

Depth information 141 indicating depth image 141p generated by depth camera 120 is stored in storage 140. Coordinate convertor 131 converts the two-dimensional coordinates and depth value of depth information 141 into three-dimensional coordinates with depth camera 120 taken as an origin, and generates three-dimensional coordinate information 142.

Floor surface estimation unit 132 estimates a region of the floor surface based on depth information 141 and three-dimensional coordinate information 142, and generates a plane equation of the floor surface. Hereinafter, the plane equation of the floor surface will be also referred to as a "floor surface equation".

Standard dimension information 143 indicating a standard size of pallet 210 is stored in storage 140 in advance.

Pallet estimation unit 133 estimates the width, depth and position of pallet 210 based on the floor surface equation, depth information 141, three-dimensional coordinate information 142, and standard dimension information 143.

Highest point estimation unit 134 estimates the height from the floor surface to the highest point of the load based on the floor surface equation, the width, depth, and a position of pallet 210, and three-dimensional coordinate information 142.

Controller 130 generates measurement information 144 including the width and depth of pallet 210, which are estimated by pallet estimation unit 133, and the height of the load estimated by highest point estimation unit 134.

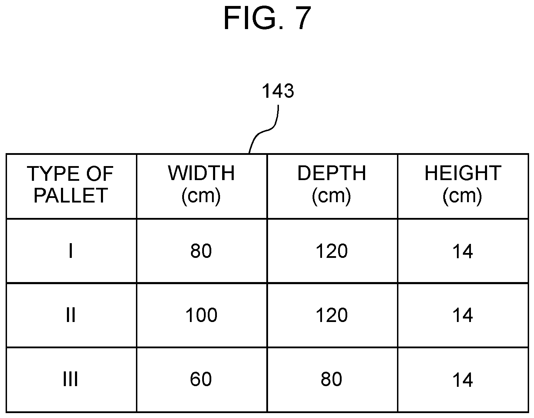

FIG. 7 illustrates an example of standard dimension information 143. Standard dimension information 143 includes one or more standard sizes of pallets. Standard dimension information 143 includes standard sizes of the pallet to be measured. In the example of FIG. 7, standard dimension information 143 includes standard widths, standard depths, and standard heights of three types of pallets. The standard sizes are determined by a country, a region, or the like.

2. Operation of measurement device

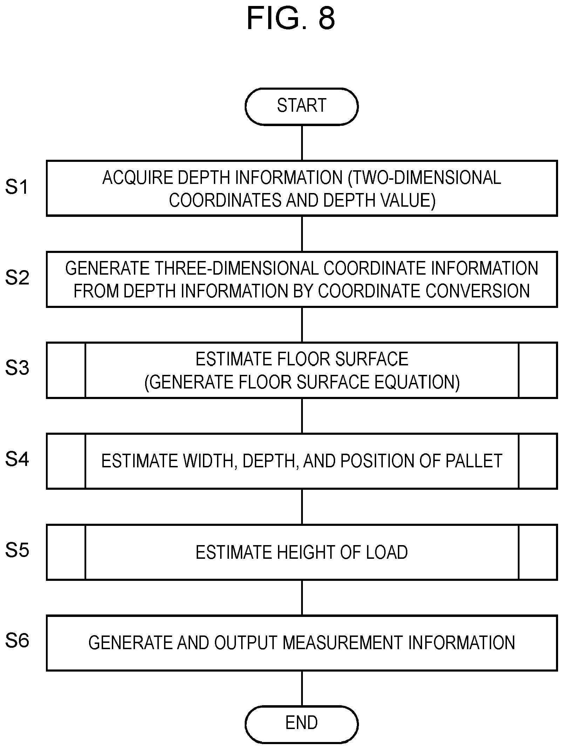

An operation of measurement device 100 of the present exemplary embodiment will be described with reference to FIGS. 8 to 16.

2.1 Overall flow

FIG. 8 illustrates an operation of controller 130 of measurement device 100. Controller 130 acquires depth information 141 from depth camera 120 (Step S1). Depth information 141 indicates such depth image 141p as shown in FIG. 5, which contains the depth value for each pixel identified by the two-dimensional coordinates.

Coordinate convertor 131 converts the two-dimensional coordinates and depth value of depth information 141 into three-dimensional coordinates with depth camera 120 taken as an origin, and generates three-dimensional coordinate information 142 (Step S2). Thus, the pixel containing information on the depth value is converted into a point in a three-dimensional coordinate system.

Floor surface estimation unit 132 estimates the floor surface in depth image 141p (Step S3). Specifically, floor surface estimation unit 132 generates the plane equation of the floor surface based on three-dimensional coordinate information 142.

Pallet estimation unit 133 estimates the width and depth of pallet 210 reflected in depth image 141p and the position of pallet 210 (Step S4).

Highest point estimation unit 134 estimates the height of the highest point of load 220 reflected in depth image 141p (Step S5).

Controller 130 generates and outputs measurement information 144 including the width and depth of pallet 210, which are estimated in Steps S4 and S5, and the height of the highest point of load 220 (Step S6).

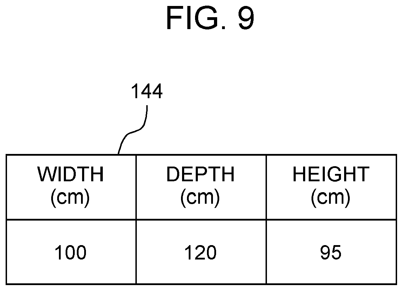

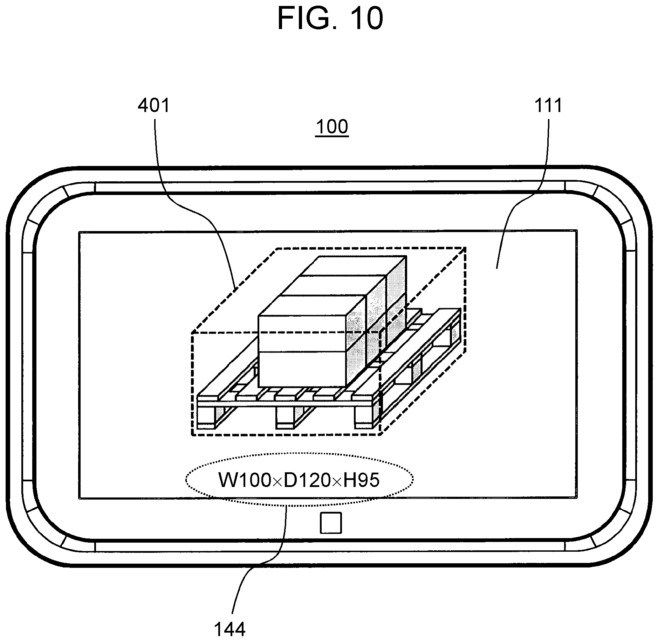

FIG. 9 illustrates an example of measurement information 144. FIG. 10 illustrates an example of an output of measurement information 144. For example, controller 130 may store, in storage 140, measurement information 144 as illustrated in FIG. 9. In this case, controller 130 corresponds to an output unit that outputs measurement information 144 to storage 140. Controller 130 may output measurement information 144 to an external device or the like via communication unit 150. In this case, communication unit 150 corresponds to an output unit that outputs measurement information 144 to the outside. As illustrated in FIG. 10, controller 130 may display measurement information 144 on display unit 111 together with rectangular parallelepiped frame 401 including the object. In this case, display unit 111 corresponds to an output unit that outputs measurement information 144 to a screen.

2.2 Generation of floor surface equation

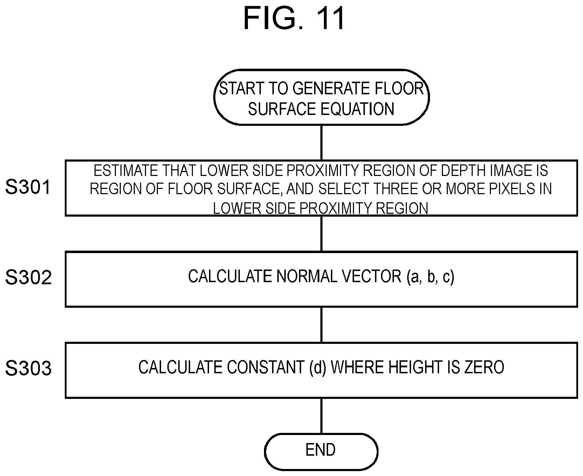

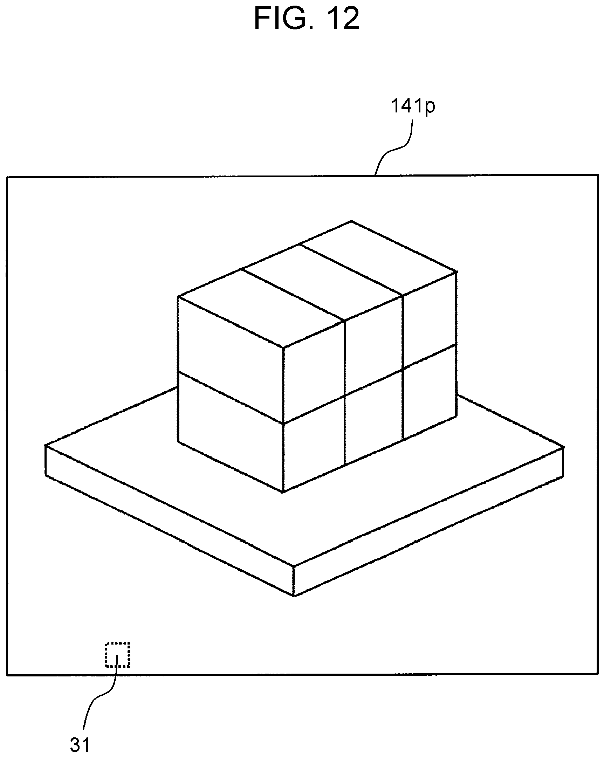

The generation of the floor surface equation will be described with reference to FIGS. 11 and 12. FIG. 11 illustrates the estimation of the floor surface, that is, the generation of the plane equation of the floor surface (details of Step S3). The plane equation "ax + by + cz + d = 0" of the floor surface is generated by the processing illustrated in FIG. 11. FIG. 12 exemplifies lower side proximity region 31 in depth image 141p.

Floor surface estimation unit 132 estimates that lower side proximity region 31 of depth image 141p is a region of the floor surface, and selects at least three points from the pixels in lower side proximity region 31 (Step S301). Lower side proximity region 31 is, for example, a region of "20 × 20" pixels near the lower side of depth image 141p. A size of lower side proximity region 31 may be changed in response to resolution of depth camera 120.

Floor surface estimation unit 132 calculates a normal vector (a, b, c) based on three-dimensional coordinates of three selected points (Step S302). For example, floor surface estimation unit 132 generates two vectors each of which connects two of the three points to each other, and calculates the normal vector from a cross product of the two vectors. At this time, floor surface estimation unit 132 may calculate a plurality of normal vectors from three or more different points in lower side proximity region 31, or may calculate a normal vector for each of a plurality of lower side proximity regions 31. In this case, floor surface estimation unit 132 may determine the normal vector of the floor surface by averaging such a plurality of the calculated normal vectors. This improves accuracy of the normal vector.

Floor surface estimation unit 132 calculates constant d of the plane equation of the floor surface with a height of the floor surface taken as zero based on three-dimensional coordinates of any point in lower side proximity region 31, for example, of the points selected in Step S301 and based on the normal vector calculated in Step S302 (Step S303). Floor surface estimation unit 132 may determine constant d by one point, or may determine constant d by averaging constants d calculated from a plurality of points in lower side proximity region 31. By the averaging, accuracy of constant d is improved.

2.3 Estimation of pallet

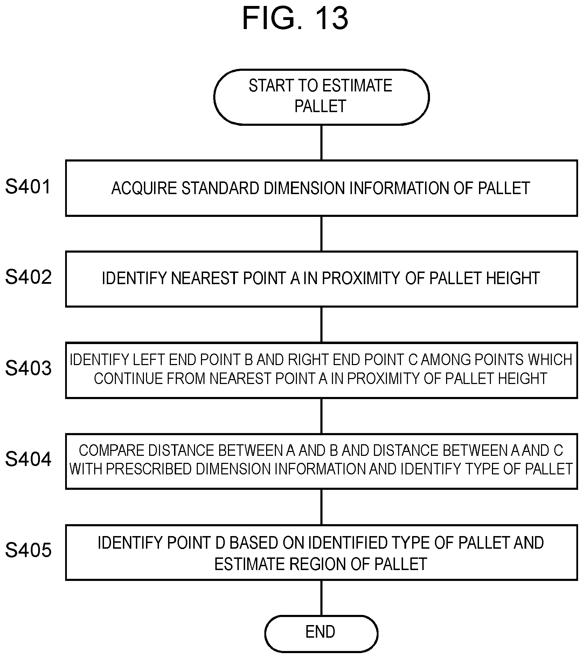

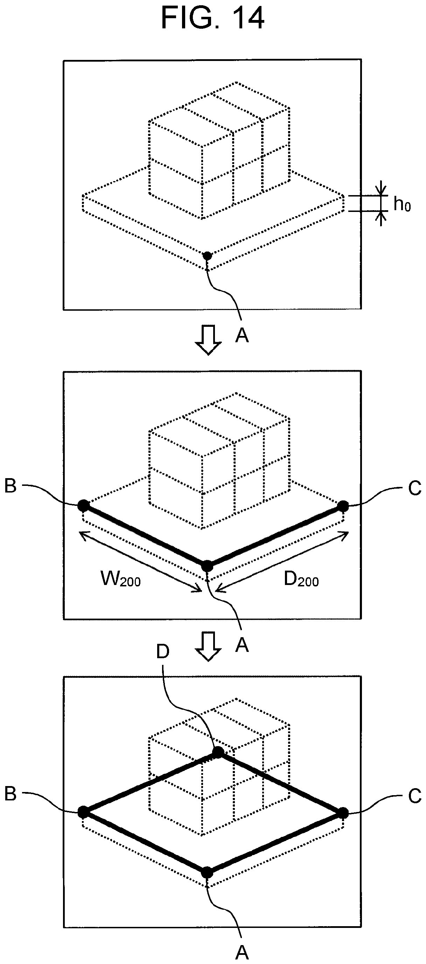

Estimation of the pallet will be described with reference to FIGS. 13 and 14. FIG. 13 illustrates the estimation of the width, depth, and position of the pallet (details of Step S4). FIG. 14 schematically illustrates the estimation of the pallet according to FIG. 13.

Pallet estimation unit 133 reads out standard dimension information 143 from storage 140, and thereby acquires standard dimension information 143 (Step S401).

Pallet estimation unit 133 detects points near the height of the pallet, which are indicated by standard dimension information 143, from among the points indicated by three-dimensional coordinate information 142, and identifies nearest point A closest to depth camera 120 among the detected points (Step S402). The proximity of the height of the pallet corresponds to a range from "standard height × α (for example, α = 0.8)" to the standard height. Specifically, the proximity of the height of the pallet includes the vicinity of a height of girder plate 211 and deck board 212 which are illustrated in FIG. 4. For example, in the case of a pallet with a height of 14 cm as illustrated in FIG. 7, nearest point A is searched for from points with a height of 12 to 14 cm. Specifically, pallet estimation unit 133 calculates the height of each point based on three-dimensional coordinate information 142 and the floor surface equation. When the normal vector (a, b, c) is calculated so as to satisfy Equation (1) in the floor surface equation, height h0 of a point having three-dimensional coordinates (x0, y0, z0) from the floor surface is obtained by Equation (2).

[Equation 1]

$$\sqrt{a^2 + b^2 + c^2} = 1 \qquad (1)$$

[Equation 2]

$$h_0 = |ax_0 + by_0 + cz_0 + d| \qquad (2)$$

Based on depth information 141, pallet estimation unit 133 identifies, as nearest point A, a point with a smallest depth value from among a plurality of points where height h0 from the floor surface, which is calculated by Equation (2), is in the proximity of the height indicated by standard dimension information 143.

Pallet estimation unit 133 searches for, on a straight line, points which continue with one another from nearest point A in the proximity of the pallet height indicated by standard dimension information 143, that is, points with the same height as that of nearest point A, and identifies both ends of the searched points as left end point B and right end point C of pallet 210 (Step S403).

Pallet estimation unit 133 compares a distance between A and B and a distance between A and C with the width and the depth which are indicated by standard dimension information 143, and identifies a type of pallet 210 (Step S404). For example, pallet estimation unit 133 individually calculates the distance between A and B and the distance between A and C based on three-dimensional coordinate information 142. If the distance between A and B is within a range of "80 cm ± α" (for example, α = 9 cm) and the distance between A and C is within a range of "120 cm ± β" (for example, β = 9 cm), then pallet estimation unit 133 determines that the type of pallet 210 is "pallet I". Based on a result of this determination, pallet estimation unit 133 estimates "AB = 80 cm" and "AC = 120 cm". Thus, dimensions of width W200 and depth D200 of object 200 as illustrated in FIG. 14 are determined.

When there are three types of pallets illustrated in FIG. 7, if the distance between A and B or the distance between A and C is not in the proximity of any of 60, 80, 100, 120, it is determined that the pallet is not detected, and the subsequent processing is stopped. If a difference between an angle formed by side AB and side AC and an expected value (for example, a right angle) is equal to or greater than a predetermined value, it may be determined that the pallet is not detected, and the subsequent processing may be stopped. Thus, a false recognition rate can be reduced.

Pallet estimation unit 133 specifies a position of point D based on the identified type of pallet type, and estimates a region of pallet 210 (Step S405). Specifically, a parallelogram including nearest point A, left end point B, and right end point C is estimated as the region of pallet 210. Thus, the position of pallet 210 in three-dimensional coordinate information 142 is estimated.

2.4 Height estimation of load

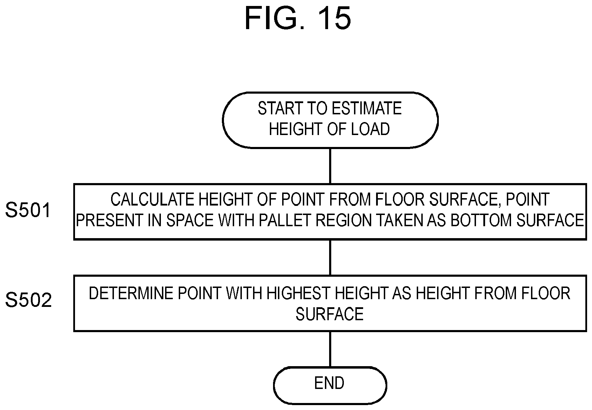

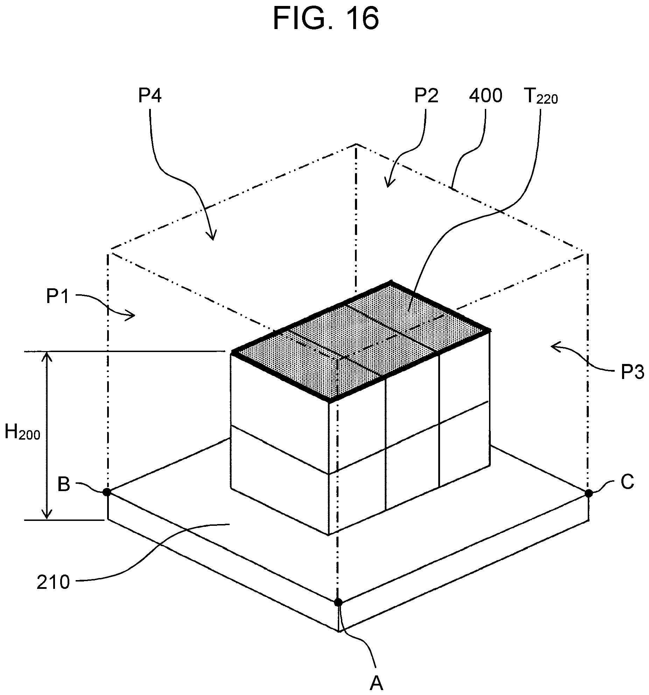

The height estimation of the load will be described with reference to FIGS. 15 and 16. FIG. 15 shows height estimation of the highest point of the load (details of Step S5). FIG. 16 schematically illustrates the height estimation of the load according to FIG. 15.

Highest point estimation unit 134 calculates a height of a point from the floor surface, the point being present in three-dimensional space 400 with the estimated region of pallet 210 taken as a bottom plane (Step S501). Three-dimensional space 400 is a space that takes, as side planes, plane P1 including side AB and a normal of the floor surface, plane P2 including side CD and a normal of the floor surface, plane P3 including side AC and a normal of the floor surface, and plane P4 including side BD and a normal of the floor surface. For example, highest point estimation unit 134 calculates plane equations of planes P1, P2, P3, and P4. Highest point estimation unit 134 considers, as points present on pallet 210, points having coordinates between plane P1 and plane P2 and between plane P3 and plane P4. Note that a bottom plane region of three-dimensional space 400 may be made larger than the estimated region of pallet 210. This makes it possible to eliminate an influence of an error of depth information 141. The height of each point from the floor surface can be calculated by above-mentioned Equation (2).

Highest point estimation unit 134 determines a highest point, of which height is the highest among the calculated heights, as a height of the highest point of the load from the floor surface (Step S502). Thus, the height of the point in top plane T220 of load 220 is estimated as height H200 of object 200. Note that continuity of such heights calculated in three-dimensional space 400 may be verified, and points without continuity may be excluded from the determination of the highest point. Thus, the influence of the noise of depth information 141 can be removed.

3. Effects and supplements

Measurement device 100 of the present exemplary embodiment measures a size of an outer shape of object 200 including pallet 210 present on the floor surface and load 220 placed on pallet 210. Measurement device 100 includes: an acquisition unit that acquires depth information 141 indicating the distances from the reference position to the floor surface and object 200; storage 140 that stores standard dimension information 143 indicating the standard size of pallet 210; controller 130 that measures the width, depth and height dimensions of object 200 by identifying pallet 210 based on depth information 141 and standard dimension information 143, and generates measurement information 144 indicating the measured width, depth, and height dimensions of object 200; and the output unit that outputs measurement information 144.

Since measurement device 100 uses both depth information 141 and standard dimension information 143, measurement device 100 can accurately measure object 200.

The acquisition unit includes depth camera 120 that photographs the floor surface and object 200 as depth information 141, and generates depth image 141p indicating the distances to the floor surface and object 200 as a depth value for each pixel.

The output unit is, for example, display unit 111 that outputs measurement information 144 to the screen. The output unit may be controller 130 that outputs measurement information 144 to storage 140. The output unit may be communication unit 150 that outputs measurement information 144 to the outside.

Controller 130 generates three-dimensional coordinate information 142 obtained by converting each pixel of depth image 141p into a point in the three-dimensional coordinate system, and calculates the plane equation of the floor surface based on three-dimensional coordinate information 142.

This makes it possible to calculate the height of the point with the floor surface taken as a reference.

Controller 130 estimates that lower side proximity region 31 of a predetermined size in depth image 141p is a region of the floor surface, and calculates the plane equation of the floor surface from the points in lower side proximity region 31. Controller 130 performs photography such that the floor is reflected at a lower portion of the screen, calculates the plane equation from the lower side proximity region, and can thereby calculate the floor surface equation.

Standard dimension information 143 includes the standard height of pallet 210. Controller 130 calculates the height of each point based on the three-dimensional coordinates of each point and the plane equation of the floor surface, and estimates the contour of pallet 210 based on the point where the calculated height is in the proximity of the standard height. Specifically, controller 130 detects nearest point A, searches for a point at the same height as that of nearest point A on the straight line, and detects left end point B and right end point C. Since controller 130 estimates side AB and side AC, which are the contour, based on the standard height, controller 130 can accurately estimate the contour.

Standard dimension information 143 includes the standard width and standard depth of pallet 210. Controller 130 calculates the width and depth of pallet 210 from the estimated contour of pallet 210 based on three-dimensional coordinate information 142, compares the calculated width and depth with the standard width and the standard depth, identifies the type of pallet 210, and estimates the width and depth of pallet 210. Controller 130 can accurately estimate the width and depth of object 200 by comparing the same with the standard width and the standard depth.

Controller 130 estimates, as the height of load 220, the highest point where the height of the point calculated by three-dimensional coordinate information 142 and the plane equation of the floor surface is the highest in the three-dimensional space with estimated pallet 210 taken as the bottom plane. The position of pallet 210 is accurately estimated, whereby the three-dimensional space in which load 220 is present can be accurately estimated. Hence, the highest point can be accurately estimated.

A measurement method of the present exemplary embodiment is a method by which controller 130 of the computer measures the size of the outer shape of object 200 including pallet 210 present on the floor surface and load 220 placed on pallet 210. The measurement method includes: Step S1 of acquiring, from the acquisition unit, depth information 141 indicating the distances from the reference position to the floor surface and object 200; Step S401 of acquiring, from storage 140, standard dimension information 143 indicating the standard size of pallet 210; Steps S4 to S6 of identifying pallet 210 based on depth information 141 and standard dimension information 143, measuring the width, depth, and height dimensions of object 200, and generating measurement information 144 indicating the measured width, depth, and height dimensions; and Step S6 of outputting measurement information 144 to the output unit. Since the measurement method uses both depth information 141 and standard dimension information 143, the measurement method can accurately measure object 200.

In the present exemplary embodiment, in Step S301 of FIG. 11, it is estimated that lower side proximity region 31 which is, for example, "20 × 20" pixels in depth image 141p is the floor surface. However, the floor surface is not limited to only lower side proximity region 31, and a range wider than lower side proximity region 31 may be estimated as the floor surface. For example, controller 130 may estimate, as the floor surface, a point continuous in coordinate with a point in lower side proximity region 31. When controller 130 calculates a normal vector from another region having the same size as that of lower side proximity region 31 around lower side proximity region 31, and an orientation of the normal vector in the other region is similar to the normal vector in lower side proximity region 31, then controller 130 may estimate that the other region is also the floor surface. When controller 130 calculates an orientation of a normal vector in a region further surrounding the other region, and the orientation is similar, then controller 130 may estimate that the surrounding region is the floor surface. In this way, such a floor surface-estimated region may be expanded. Controller 130 may estimate the region of the floor surface based on orientations of normal vectors calculated from a plurality of points and distances between the points. Controller 130 may determine such orientations of normal vectors and such distances between the points in the entire region in depth image 141p, and may determine that points in which the orientations of the normal vectors and the distances between the points are close to one another are on the same plane. Controller 130 may determine the normal vector of the floor surface by calculating and averaging a plurality of normal vectors from points in a region estimated to be the floor surface.

In identifying nearest point A in Step S402 of FIG. 13, in the case of a pallet having block 213 as illustrated in FIG. 4 at the position of nearest point A, for example, the presence of a pixel having a height of block 213 in a positional relationship perpendicular to nearest point A may be confirmed using the fact that a member of the pallet is present at a position lower than nearest point A. Thus, the influence of noise in depth image 141p can be eliminated.

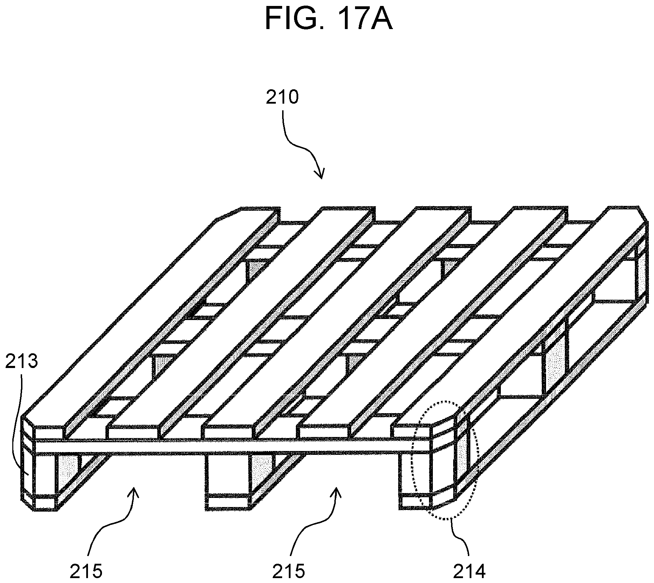

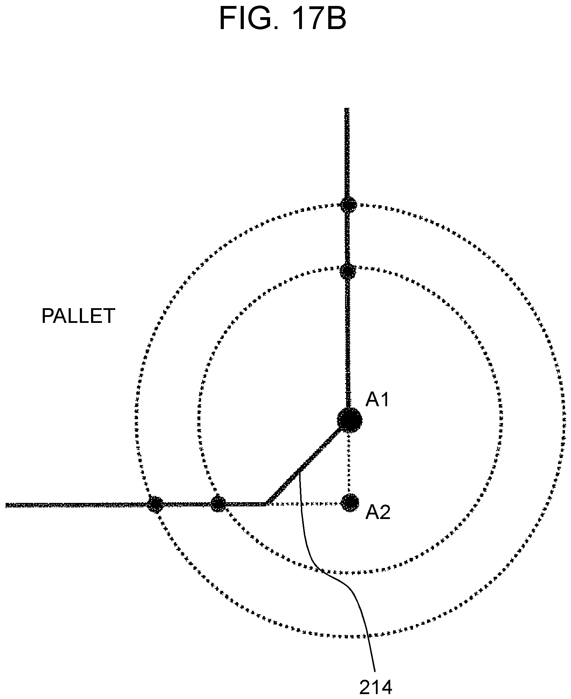

FIG. 17A illustrates an example of a pallet having corner cut portions. FIG. 17B exemplifies a nearest point calculated when such a corner cut portion is present. When corner cut portion 214 is present in pallet 210, point A2 may be calculated from point A1, for example, when point A1 is identified as the nearest point in Step S402. Point A2 is, for example, a point where straight lines each of which connects two points on concentric circles to each other intersect each other, the concentric circles having detected point A1 taken as a center, a width equal to or larger than a width of corner cut portion 214, and radii different from each other. In this case, point A2 thus calculated may be defined as nearest point A.

In identifying left end point B and right end point C in Step S403 of FIG. 13, even if there is a section that cannot be traced on a straight line when the three-dimensional coordinates are evaluated linearly, if the section is short, such points may be further traced while temporarily assuming that the points are continuous. That is, if a distance between the interrupted points is within a predetermined distance, it may be considered that the points are continuous. Thus, even when there is a data loss in depth information 141, a false recognition due to an effect of the data loss can be reduced.

All types of pallets to be detected may be assumed, and with regard to spots where there are no insertion holes 215 as illustrated in FIG. 17A, for example, all positions where blocks 213 and the like may be present, heights thereof may be sequentially evaluated in a circular arc shape with the nearest point taken as a base point. Points of which heights change while straddling a reference height such as a half of the height of the pallet are searched for. Among these, two points B', C' which form an angle closest to the right angle with nearest point A taken as a base point may be considered as spots on left side AB and right side AC, and left end point B and right end point C may be searched for on extension lines thereof. When the accuracy of depth information 141 is low, so that a straight line is detected as a curved line, then a false recognition caused by the fact that the points are traced linearly at a distorted angle from the vicinity of nearest point A can be reduced.

The points on left side AB and right side AC, which are being searched for, may be defined as point B' and point C', respectively, and may be added to extension lines of segment AB' and segment AC', and it may be evaluated whether or not there is a point on a straight line that is orthogonal to segment AC' and passes through nearest point A and a straight line that is orthogonal to segment AB' and passes through nearest point A. When such a point is detected, it may be considered that there is a point at the position with the height of the pallet, and the search may be continued. Thus, the false recognition can be reduced even when the accuracy of the depth information is low or there is a data loss.

(Second exemplary embodiment)

A second exemplary embodiment is different from the first exemplary embodiment in the estimation method of the pallet. In the first exemplary embodiment, the points of which heights calculated based on three-dimensional coordinate information 142 are close to the standard height are detected, whereby nearest point A, left end point B and right end point C are detected. In the present exemplary embodiment, nearest point A, left end point B, and right end point C are detected based on a plane in which orientations of normal vectors are the same.

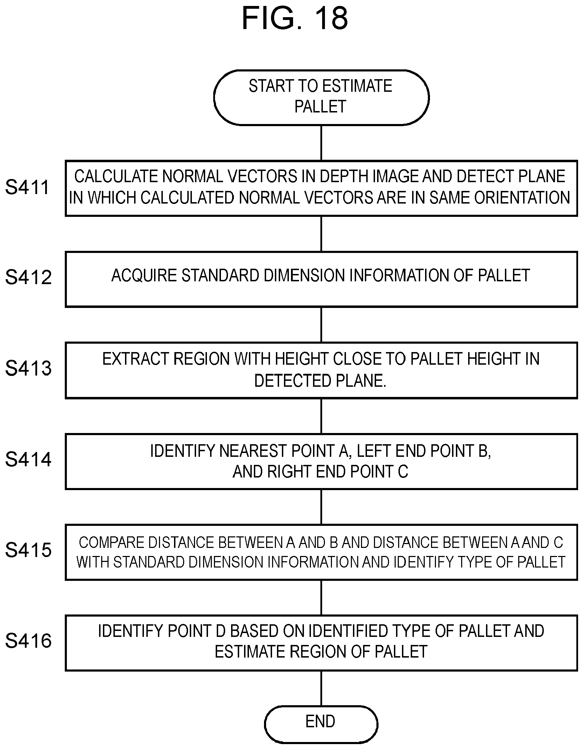

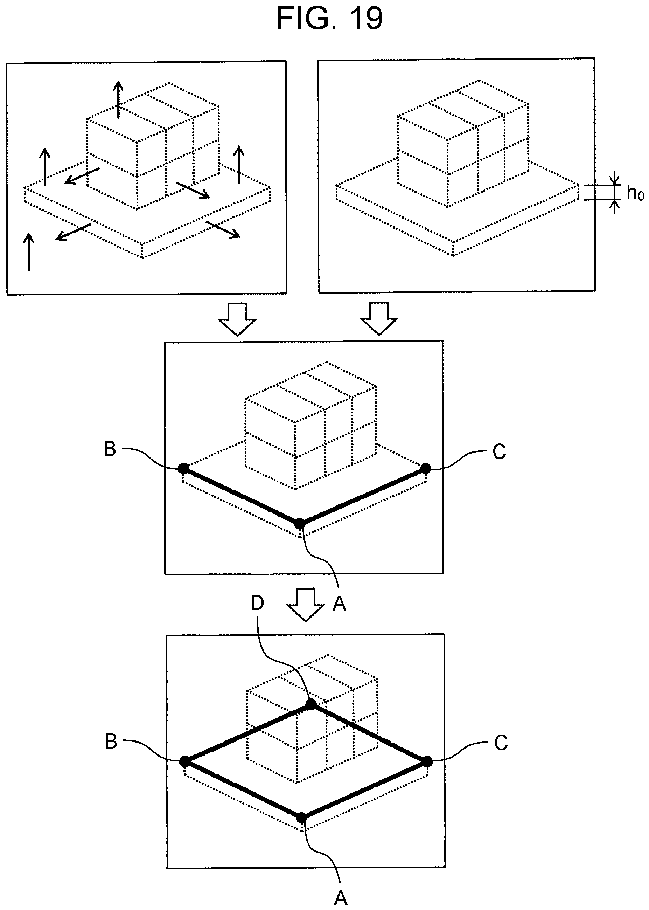

Such estimation of the pallet in the second exemplary embodiment will be described with reference to FIGS. 18 and 19. FIG. 18 illustrates the estimation of the width, depth, and position of the pallet in the second exemplary embodiment (details of Step S4). FIG. 19 schematically illustrates the estimation of the pallet according to FIG. 18.

Pallet estimation unit 133 calculates normal vectors corresponding to the respective pixels in depth image 141p based on three-dimensional coordinate information 142, and detects a plane in which orientations of the calculated normal vectors are the same (Step S411).

Pallet estimation unit 133 reads out standard dimension information 143 from storage 140, and thereby acquires standard dimension information 143 (Step S412).

Pallet estimation unit 133 extracts a region in the detected plane, where height h0 of the point from the floor surface is close to the pallet height indicated by standard dimension information 143 (Step S413). The extracted region corresponds to two straight lines. The extracted linear region is estimated as the contour of pallet 210.

Pallet estimation unit 133 identifies nearest point A, left end point B, and right end point C from the two extracted linear regions (Step S414). For example, pallet estimation unit 133 identifies an end of a left line as left end point B and an end of a right line as right end point C. Pallet estimation unit 133 identifies an intersection of the two lines as nearest point A.

Processing (Step S415 and Step S416) after identifying nearest point A, left end point B, and right end point C is the same as that of the first exemplary embodiment (Step S404 and Step S405 illustrated in FIG. 13).

As described above, standard dimension information 143 includes the standard height of pallet 210. Controller 130 calculates the normal vectors of the points corresponding to the respective pixels in depth image 141p based on three-dimensional coordinate information 142. Controller 130 detects the plane in which the orientations of the calculated normal vectors are in the same direction. Moreover, controller 130 calculates the height of each point based on the three-dimensional coordinates of each point and the plane equation of the floor surface. Controller 130 estimates, as the contour of pallet 210, a portion in which the height calculated in the detected plane is close to the standard height. Thus, the contour of pallet 210 can be accurately estimated.

(Third exemplary embodiment)

In the first and second exemplary embodiments, the measurements were taken based on depth information 141 obtained from depth camera 120. In a third exemplary embodiment, the measurement will be taken using, in addition to depth information 141, color information obtained from a visible light camera.

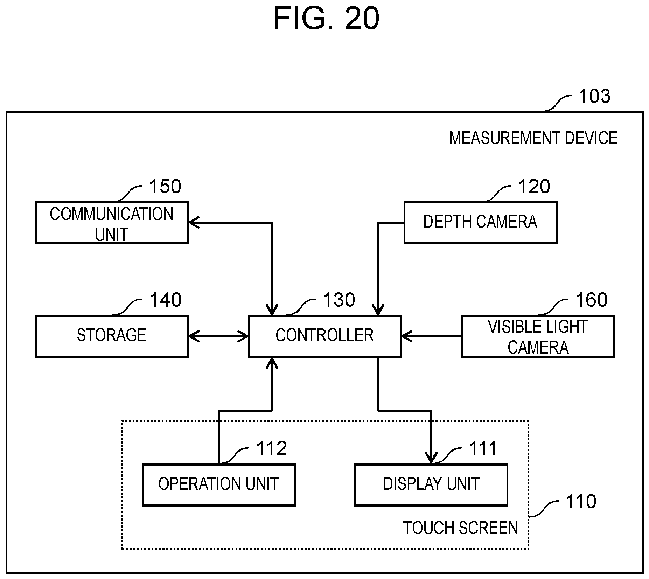

FIG. 20 is a block diagram illustrating a configuration of a measurement device according to the third exemplary embodiment. Measurement device 103 of the third exemplary embodiment further includes visible light camera 160, which generates color information, in addition to the configuration of the first exemplary embodiment. Visible light camera 160 includes an image sensor such as a CCD image sensor, a CMOS image sensor, and an NMOS image sensor. The color information is, for example, a color image showing an RGB value for each pixel. Depth camera 120 and visible light camera 160 may be separate cameras. Depth camera 120 and visible light camera 160 may be one camera capable of acquiring both the depth information and the color information.

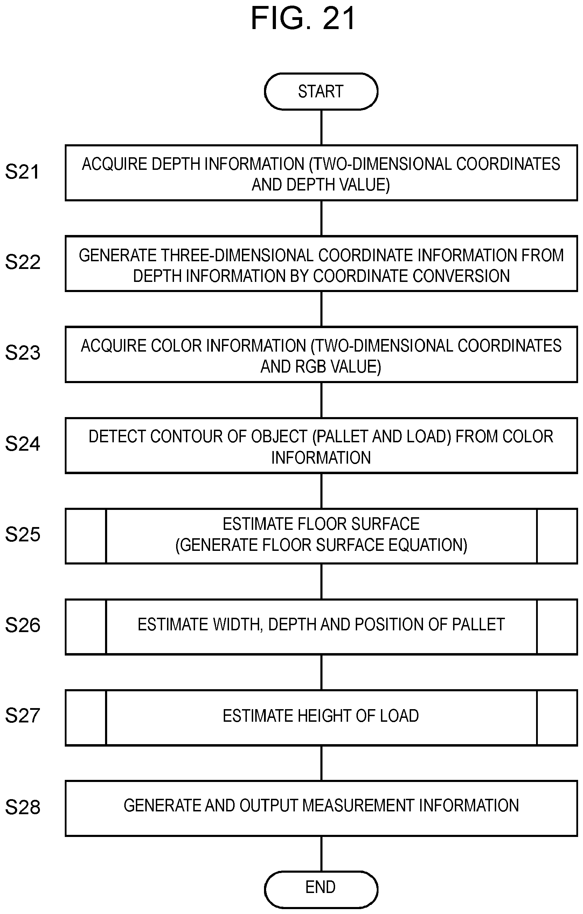

FIG. 21 shows an operation of controller 130 of measurement device 103 according to the third exemplary embodiment. Step S21 of acquiring depth information 141 from depth camera 120, Step S22 of generating three-dimensional coordinate information 142 from depth information 141, and Step S28 of generating and outputting measurement information 144 are the same as those (Step S1, Step S2, and Step S6 which are illustrated in FIG. 8) of the first exemplary embodiment.

Controller 130 acquires the color information from visible light camera 160 (Step S23). The color information includes an RGB value for each pixel identified by two-dimensional coordinates. The two-dimensional coordinates of the color information and the two-dimensional coordinates of the depth information are associated with each other according to positions of depth camera 120 and visible light camera 160. For example, when depth camera 120 and visible light camera 160 are achieved by one camera, the two-dimensional coordinates of the color information and the two-dimensional coordinates of the depth information are the same. That is, each pixel of the depth image and each pixel of the color image have the same coordinate value.

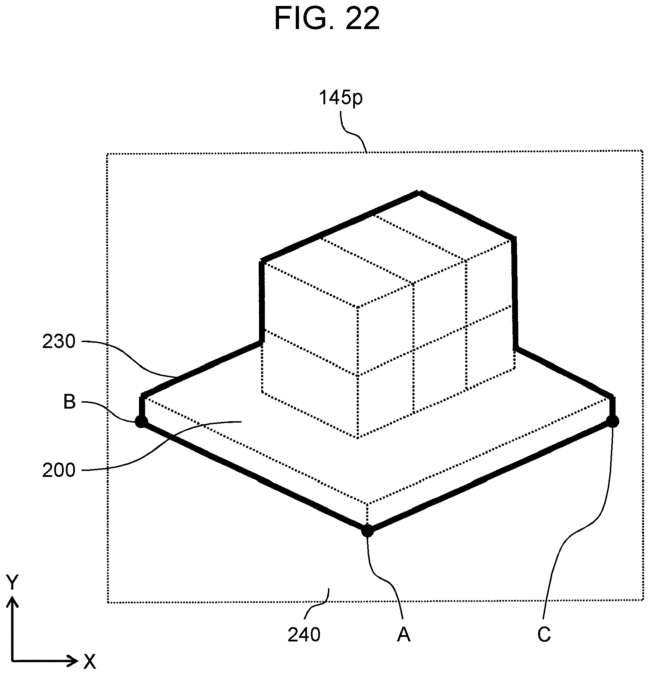

For example, controller 130 performs image processing for the color image based on the color information, and thereby detects contour 230 of object 200 as illustrated in FIG. 22 (Step S24). Contour 230 is, for example, a contour representing the entire outer shape of object 200 as illustrated in FIG. 22. Contour 230 may be a contour representing an outer shape of each of the pallet and the load.

Controller 130 refers to contour 230 detected based on the color information in addition to depth information 141 and three-dimensional coordinate information 142, and performs estimation of the floor surface (Step S25), estimation of the pallet (Step S26), and height estimation of the load (Step S27). A description will be given below of details of the estimation of the floor surface (Step S25), the estimation of the pallet (Step S26), and the height estimation of the load (Step S27).

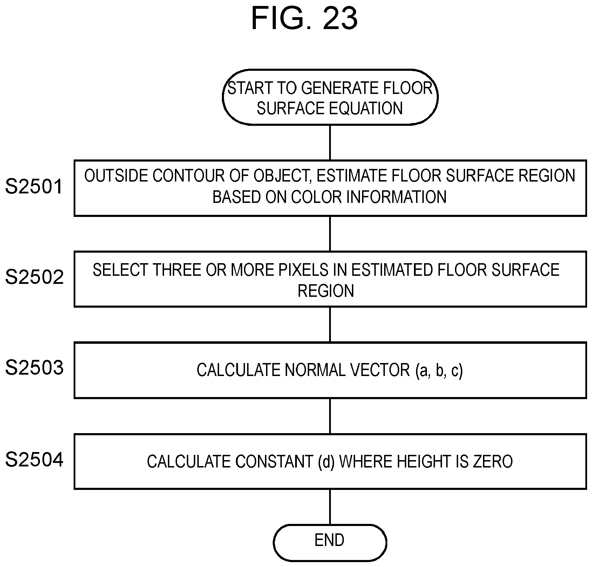

FIG. 23 illustrates the estimation of the floor surface (details of Step S25). In region 240 outside contour 230 of object 200 as illustrated in FIG. 22, controller 130 estimates a region of the floor surface based on three-dimensional coordinate information 142 and the color information (Step S2501). For example, controller 130 estimates, as such a floor surface region, a region within region 240 outside contour 230 and having an RGB value similar to RGB values of pixels on a lower side of color image 145p. Note that the estimation of the floor surface region, which is based on the color information, may be performed using machine learning.

Controller 130 selects at least three points from the pixels in the estimated floor surface region (Step S2502). Calculation of a normal vector (Step S2503) and calculation of constant d (Step S2504) after the points are selected are the same as those in the first exemplary embodiment (Steps S302, S303).

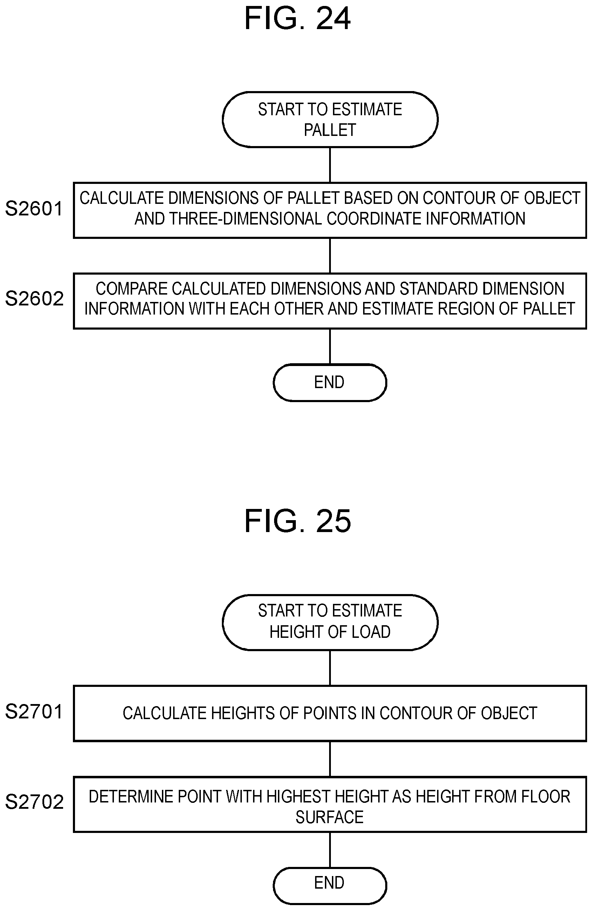

FIG. 24 illustrates estimation of the pallet (details of Step S26). Controller 130 calculates the dimensions of pallet 210 based on contour 230 of object 200 and three-dimensional coordinate information 142 (Step S2601). For example, controller 130 estimates that a lower side (Y-axis negative direction side) of contour 230 in color image 145p is the contour of pallet 210, and identifies nearest point A, left end point B, and right end point C from both ends of an edge illustrating the contour. Controller 130 calculates the distance between A and B and the distance between A and C based on the three-dimensional coordinates of nearest point A, left end point B, and right end point C, which are thus identified.

The region estimation of pallet 210 (Step S2602), which is based on comparison between the calculated dimensions and standard dimension information 143, is the same as that of the first exemplary embodiment. For example, the region estimation of pallet 210 (Step S2602) corresponds to the identification of the type of pallet 210 (Step S404) and the identification of point D (Step S405), which are based on standard dimension information 143.

FIG. 25 illustrates the height estimation of the load (details of Step S27). Controller 130 calculates heights of points in contour 230 of object 200 based on three-dimensional coordinate information 142 and the floor surface equation (Step S2701). Controller 130 may estimate, as the contour of load 220, an upper side (Y-axis positive direction side) of contour 230 in color image 145p. Controller 130 determines a highest point, of which height is the highest among the calculated heights, as a height of the highest point of the load from the floor surface (Step S2702).

As described above, measurement device 103 of the present exemplary embodiment further includes visible light camera 160 that photographs object 200 and generates color information indicating a color image. Controller 130 estimates the region of the floor surface based on the color information, and calculates the plane equation of the floor surface from the points in the estimated region of the floor surface. Controller 130 extracts the contour of pallet 210 by performing image processing for the color image. Controller 130 detects the contour of load 220 by performing the image processing for the color information, and estimates, as the height of load 220, the highest point where the height of the point calculated by three-dimensional coordinate information 142 and the plane equation of the floor surface is the highest in the inside of the detected contour. The measurement accuracy is improved using the depth information and the color information in combination with each other.

(Fourth exemplary embodiment)

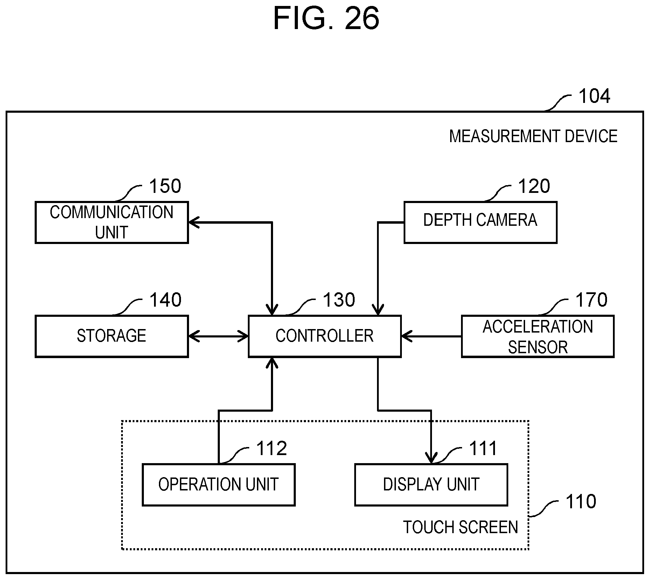

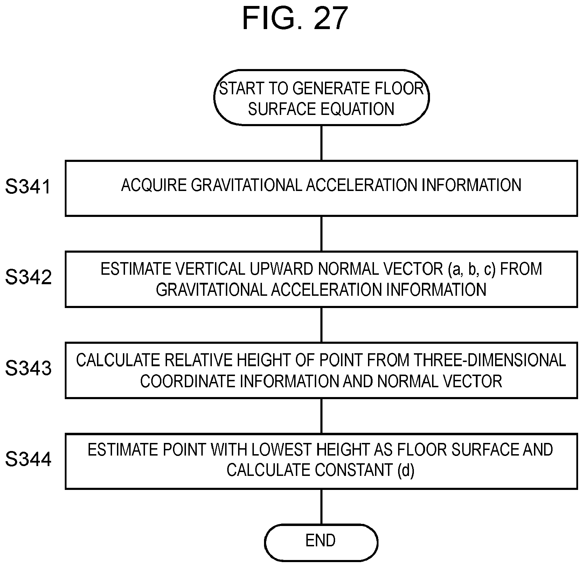

A measurement device of a fourth exemplary embodiment will be described with reference to FIGS. 26 and 27. Measurement device 104 of the fourth exemplary embodiment is different from that of the first exemplary embodiment in the estimation of the floor surface.

FIG. 26 is a block diagram illustrating a configuration of the measurement device according to the fourth exemplary embodiment. Measurement device 104 of the fourth exemplary embodiment further includes acceleration sensor 170 in addition to the configuration of the first exemplary embodiment. Acceleration sensor 170 detects gravitational acceleration of measurement device 104, and generates gravitational acceleration information indicating the detected gravitational acceleration.

FIG. 27 illustrates estimation of the floor surface in the fourth exemplary embodiment, that is, the generation of the plane equation of the floor surface (details of Step S3). Controller 130 acquires the gravitational acceleration information from acceleration sensor 170 (Step S341). Controller 130 estimates such a vertical upward normal vector (a, b, c) based on the gravitational acceleration information (Step S342). Controller 130 calculates relative heights of points from three-dimensional coordinate information 142 and the estimated normal vector (Step S343). Controller 130 estimates a point with the lowest relative height as the floor surface, and calculates constant d (Step S344). That is, in the present exemplary embodiment, the floor surface is estimated based on a point where the normal vector is oriented opposite to the orientation of gravity. Thus, the floor surface can be accurately estimated even when object 200 is photographed in a state in which measurement device 104 is tilted.

As described above, measurement device 104 further includes acceleration sensor 170 that detects the gravitational acceleration. Controller 130 calculates the plane equation of the floor surface based on the orientation of the normal vector of the floor surface, which is estimated based on the gravitational acceleration, and three-dimensional coordinate information 142. Thus, even if the orientation of depth camera 120 is tilted in a direction horizontal or vertical to the ground, the floor surface equation can be accurately generated.

(Fifth exemplary embodiment)

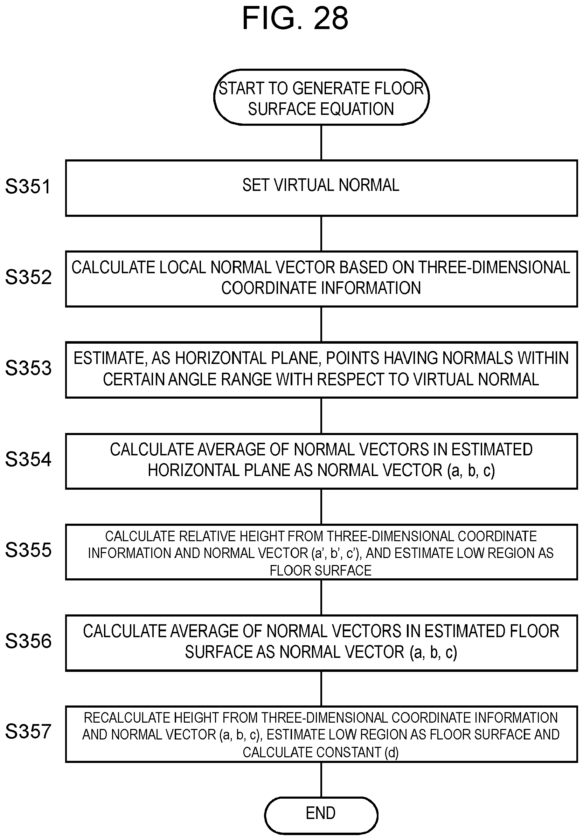

A measurement device of a fifth exemplary embodiment will be described with reference to FIG. 28. The measurement device of the fifth exemplary embodiment is different from that of the first exemplary embodiment in the estimation of the floor surface. A configuration of the measurement device of the fifth exemplary embodiment is the same as that of measurement device 100 of the first exemplary embodiment. FIG. 28 illustrates estimation of the floor surface in the fifth exemplary embodiment, that is, the generation of the plane equation of the floor surface (details of Step S3).

Controller 130 sets a provisional virtual normal (Step S351). Controller 130 calculates local normal vectors based on three-dimensional coordinate information 142 (Step S352). Controller 130 estimates, as a horizontal plane, points having normals within a certain angle range with respect to the virtual normal (Step S353). Controller 130 calculates, as a normal vector (a', b', c'), an average of the normal vectors in the estimated horizontal plane (Step S354). Controller 130 calculates relative heights of the points from three-dimensional coordinate information 142 and the normal vector (a', b', c'), and estimates, as the floor surface, a region in which the relative heights are lower than a predetermined value (Step S355). Controller 130 calculates an average of normal vectors in the estimated floor surface as a normal vector (a, b, c) of the floor surface (Step S356). Controller 130 recalculates such heights of the points from three-dimensional coordinate information 142 and the normal vector (a, b, c) of the floor surface, and calculates constant d while taking, as the floor surface, a region with a height lower than a predetermined value (Step S357).

As described above, controller 130 calculates the normal vectors of the points corresponding to the pixels in depth image 141p based on three-dimensional coordinate information 142, and estimates, as the horizontal plane, points having the normal vectors in which the calculated normal vectors are within a certain angle range with respect to a predetermined virtual normal vector. Controller 130 estimates the region of the floor surface based on normal vectors in the estimated horizontal plane and the three-dimensional coordinate information, and calculates the plane equation of the floor surface from the points in the estimated region of the floor surface.

According to the present exemplary embodiment, the normal vectors are calculated from entire depth image 141p without depending on lower side proximity region 31, and accordingly, the normal vectors can be accurately calculated even when the noise around the lower portion of depth image 141p is strong. The measurement device of the present exemplary embodiment is particularly effective when it is possible to estimate an approximate holding angle at the time of photography.

(Other exemplary embodiments)

As above, the first to fifth exemplary embodiments have been described as exemplifications of the technique disclosed in the present application. However, the technique in the present disclosure is not limited to the exemplary embodiments and is applicable to exemplary embodiments appropriately subjected to changes, replacements, additions, omissions, and the like. Moreover, a new exemplary embodiment can be made by combining the respective constituent elements described in the above first to fifth exemplary embodiments.

In the above exemplary embodiment, depth camera 120 is built in the measurement device, but depth camera 120 does not have to be built in the measurement device. The measurement device may acquire, via communication unit 150, depth information 141 generated by depth camera 120. In this case, communication unit 150 corresponds to the acquisition unit that acquires depth information 141. Likewise, visible light camera 160 does not have to be built into the measurement device. Acceleration sensor 170 does not have to be built into the measurement device. The measurement device may acquire color information and/or gravitational acceleration information together with depth information 141 via communication unit 150.

It is possible to achieve the measurement device of the present disclosure by cooperation with hardware resources such as a processor, a memory, and a program.

As above, the exemplary embodiments have been described as exemplifications of the technique in the present disclosure. For that purpose, the accompanying drawings and detailed descriptions have been provided. Hence, the constituent elements described in the accompanying drawings and the detailed description may include not only the constituent elements essential for solving the problem but also constituent elements that are not essential for solving the problem in order to illustrate the technique. Therefore, it should not be immediately recognized that such inessential constituent elements are essential by the fact that the inessential constituents are described in the accompanying drawings and the detailed description.

Moreover, since the above exemplary embodiments illustrate the technique in the present disclosure, various modifications, substitutions, additions, omissions and the like can be performed within the scope of claims.

INDUSTRIAL APPLICABILITY

The present disclosure is applicable to a measurement device and a measurement method which measure the width and depth of the pallet and the height of the load in a state in which the load is placed on the pallet.

REFERENCE MARKS IN THE DRAWINGS

31: lower side proximity region
100, 103, 104: measurement device
110: touch screen
111: display unit
112: operation unit
120: depth camera
130: controller
131: coordinate convertor
132: floor surface estimation unit
133: pallet estimation unit
134: highest point estimation unit
140: storage
141: depth information
141p: depth image
142: three-dimensional coordinate information
143: standard dimension information
144: measurement information
145p: color image
150: communication unit
160: visible light camera
170: acceleration sensor
200: object
210: pallet
211: girder plate
212: deck board
213: block
214: corner cut portion
215: insertion hole
220: load
230: contour
400: three-dimensional space
A: nearest point
A1, A2, D: point
B: left end point
C: right end point

**Claims**

1.   A measurement device (100) that measures a size of an outer shape of an object (200), the object including a platform (210) present on a floor surface and a load (220) placed on the platform, the measurement device comprising:

an acquisition unit (120) that acquires depth information indicating distances from a reference position to the floor surface and the object;
a storage (140) that stores standard dimension information indicating a standard size of the platform;
a controller (130) that measures width, depth, and height dimensions of the object by identifying the platform based on the depth information and the standard dimension information, and generates measurement information indicating the measured width, depth, and height dimensions; and
an output unit (111) that outputs the measurement information.

2. The measurement device according to claim 1, wherein the acquisition unit includes a depth camera (120) that photographs the floor surface and the object as the depth information, and generates a depth image indicating distances from the reference position to the floor surface and the object as a depth value for each pixel.

3. The measurement device according to claim 2, wherein the controller generates three-dimensional coordinate information obtained by converting each pixel of the depth image into a point in a three-dimensional coordinate system, and calculates a plane equation of the floor surface based on the three-dimensional coordinate information.

4. The measurement device according to claim 3, wherein the controller estimates that a lower side proximity region of a predetermined size in the depth image is a region of the floor surface, and calculates the plane equation of the floor surface from a point in the lower side proximity region.

5. The measurement device according to claim 3, wherein the controller estimates a region of the floor surface based on an orientation of normal vector calculated from a plurality of points and a distance between the plurality of points, and calculates the plane equation of the floor surface from points in the estimated region of the floor surface.

6. The measurement device according to claim 3, further comprising a visible light camera (160) that photographs the object and generates color information indicating a color image, wherein the controller estimates a region of the floor surface based on the color information, and calculates the plane equation of the floor surface from points in the estimated region of the floor surface.

7. The measurement device according to claim 3, further comprising an acceleration sensor (170) that detects gravitational acceleration,
wherein the controller calculates the plane equation of the floor surface based on an orientation of a normal vector of the floor surface, the normal vector being estimated based on the gravitational acceleration, and based on the three-dimensional coordinate information.

8. The measurement device according to claim 3, wherein the controller calculates normal vectors of points corresponding to pixels in the depth image based on the three-dimensional coordinate information, estimates, as a horizontal plane, points having normal vectors in which the calculated normal vectors are within a certain angle range with respect to a predetermined virtual normal vector, estimates a region of the floor surface based on the normal vectors in the estimated horizontal plane and the three-dimensional coordinate information, and calculates the plane equation of the floor surface from the points in the estimated region of the floor surface.

9. The measurement device according to claim 3, wherein

the standard dimension information includes a standard height of the platform, and
the controller calculates a height of each point based on three-dimensional coordinates of each point and the plane equation of the floor surface, and estimates a contour of the platform based on a point where the calculated height is close to the standard height.

10. The measurement device according to claim 3, wherein

the standard dimension information includes a standard height of the platform, and
the controller calculates normal vectors of points corresponding to respective pixels in the depth image based on the three-dimensional coordinate information, detects a plane in which orientations of the calculated normal vectors are in a same direction, calculates heights of the respective points based on a plane equation of the floor surface, and estimates, as a contour of the platform, a portion in which the height calculated in the detected plane is close to the standard height.

11. The measurement device according to claim 3, further comprising a visible light camera that photographs the object and generates color information indicating a color image,
wherein the controller extracts a contour of the platform by performing image processing for the color image.

12. The measurement device according to any one of claims 9 to 11, wherein

the standard dimension information includes a standard width and standard depth of the platform,
the controller calculates a width and depth of the platform from the estimated contour of the platform based on the three-dimensional coordinate information, and compares the calculated width and depth with the standard width and the standard depth, identifies a type of the platform, and estimates the width and depth of the platform.

13. The measurement device according to claim 12, wherein the controller estimates, as a height of the load, a highest point where a height of a point calculated by the three-dimensional coordinate information and the plane equation of the floor surface is highest in a three-dimensional space with the estimated platform taken as a bottom plane.

14. The measurement device according to claim 3, further comprising a visible light camera (160) that photographs the object and generates color information indicating a color image,
wherein the controller detects a contour of the load by performing image processing for the color image, and estimates, as a height of the load, a highest point where a height of a point calculated by the three-dimensional coordinate information and the plane equation of the floor surface is highest in an inside of the detected contour.

15. A measurement method for measuring a size of an outer shape of an object, the object including a platform present on a floor surface and a load placed on the platform, the measurement method comprising:

a step of acquiring depth information indicating distances from a reference position to the floor surface and the object;
a step of acquiring standard dimension information indicating a standard size of the platform;
a step of measuring width, depth, and height dimensions of the object by identifying the platform based on the depth information and the standard dimension information, and generating measurement information indicating the width, depth, and height dimensions measured in the measuring; and
a step of outputting the measurement information generated in the generating.

**Patentansprüche**

1. Messvorrichtung (100), die eine Größe einer äußeren Form eines Objektes (200) misst, wobei das Objekt eine auf einer Bodenfläche vorhandene Plattform (210) sowie eine auf die Plattform aufgesetzte Last (220) einschließt und die Messvorrichtung umfasst:

eine Erfassungs-Einheit (120), die Tiefen-Informationen erfasst, die Abstände von einer Bezugsposition zu der Bodenfläche und dem Objekt anzeigen;
einen Speicher (140), der Standardabmessungs-Informationen speichert, die eine Standardgröße der Plattform anzeigen;
eine Steuerungseinrichtung (130), die Breiten-, Tiefen- und Höhenabmessungen des Objektes misst, indem sie die Plattform auf Basis der Tiefen-Informationen sowie der Standardabmessungs-Informationen identifiziert, und Messungs-Informationen erzeugt, die die gemessenen Breiten-, Tiefen- und Höhenabmessungen anzeigen; sowie
eine Ausgabe-Einheit (111), die die Messungs-Informationen ausgibt.

2. Messvorrichtung nach Anspruch 1, wobei die Erfassungs-Einheit eine Tiefen-Kamera (120) enthält, die die Bodenfläche und das Objekt als die Tiefen-Informationen fotografiert und ein Tiefen-Bild erzeugt, das Abstände von der Bezugsposition zu der Bodenfläche und dem Objekt als einen Tiefen-Wert für jedes Pixel anzeigt.

3. Messvorrichtung nach Anspruch 2, wobei die Steuerungseinrichtung dreidimensionale Koordinaten-Informationen erzeugt, die durch Umwandeln jedes Pixels des Tiefen-Bildes in einen Punkt in einem dreidimensionalen Koordinatensystem ermittelt werden, und eine Ebenengleichung der Bodenfläche auf Basis der dreidimensionalen Koordinaten-Informationen berechnet.

4. Messvorrichtung nach Anspruch 3, wobei die Steuerungseinrichtung schätzt, dass ein Nahbereich der unteren Seite einer vorgegebenen Größe in dem Tiefen-Bild ein Bereich der Bodenfläche ist, und die Ebenengleichung der Bodenfläche anhand eines Punktes in dem Nahbereich der unteren Seite berechnet.

5. Messvorrichtung nach Anspruch 3, wobei die Steuerungseinrichtung einen Bereich der Bodenfläche auf Basis einer Ausrichtung eines anhand einer Vielzahl von Punkten berechneten Normalenvektors und eines Abstandes zwischen der Vielzahl von Punkten schätzt und die Ebenengleichung der Bodenfläche anhand von Punkten in dem geschätzten Bereich der Bodenfläche berechnet.

**6.** Messvorrichtung nach Anspruch 3, die des Weiteren eine Kamera (160) für sichtbares Licht umfasst, die das Objekt fotografiert und Farben-Informationen erzeugt, die ein Farben-Bild anzeigen,
wobei die Steuerungseinrichtung einen Bereich der Bodenfläche auf Basis der Farben-Informationen schätzt und die Ebenengleichung der Bodenfläche anhand von Punkten in dem geschätzten Bereich der Bodenfläche berechnet.

**7.** Messvorrichtung nach Anspruch 3, die des Weiteren einen Beschleunigungssensor (170) umfasst, der Gravitationsbeschleunigung erfasst,
wobei die Steuerungseinrichtung die Ebenengleichung der Bodenfläche auf Basis einer Ausrichtung eines Normalenvektors der Bodenfläche sowie auf Basis der dreidimensionalen Koordinaten-Informationen berechnet, wobei der Normalenvektor auf Basis der Gravitationsbeschleunigung geschätzt wird.

**8.** Messvorrichtung nach Anspruch 3, wobei die Steuerungseinrichtung Normalenvektoren von Punkten, die Pixeln in dem Tiefen-Bild entsprechen, auf Basis der dreidimensionalen Koordinaten-Informationen berechnet, Punkte mit Normalenvektoren, in denen die berechneten Normalenvektoren innerhalb eines bestimmten Winkelbereiches in Bezug auf einen vorgegebenen virtuellen Normalenvektor liegen, als eine horizontale Ebene schätzt, einen Bereich der Bodenfläche auf Basis der Normalenvektoren in der geschätzten horizontalen Ebene sowie der dreidimensionalen Koordinaten-Informationen schätzt und die Ebenengleichung der Bodenfläche anhand der Punkte in dem geschätzten Bereich der Bodenfläche berechnet.

**9.** Messvorrichtung nach Anspruch 3, wobei

die Standardabmessungs-Informationen eine Standard-Höhe der Plattform einschließen, und
die Steuerungseinrichtung eine Höhe jedes Punktes auf Basis dreidimensionaler Koordinaten jedes Punktes sowie der Ebenengleichung der Bodenfläche berechnet und eine Kontur der Plattform auf Basis eines Punktes schätzt, an dem die berechnete Höhe nahe an der Standardhöhe liegt.

**10.** Messvorrichtung nach Anspruch 3, wobei

die Standardabmessungs-Informationen eine Standard-Höhe der Plattform einschließen, und
die Steuerungseinrichtung Normalenvektoren von Punkten, die jeweiligen Pixeln in dem Tiefen-Bild entsprechen, auf Basis der dreidimensionalen Koordinaten-Informationen berechnet, eine Ebene erfasst, in der Ausrichtungen der berechneten Normalenvektoren in der gleichen Richtung verlaufen, Höhen der jeweiligen Punkte auf Basis einer Ebenengleichung der Bodenfläche berechnet und als eine Kontur der Plattform einen Abschnitt schätzt, in dem die in der erfassten Ebene berechnete Höhe nahe an der Standard-Höhe liegt.

**11.** Messvorrichtung nach Anspruch 3, die des Weiteren eine Kamera für sichtbares Licht umfasst, die das Objekt fotografiert und Farben-Informationen erzeugt, die ein Farben-Bild anzeigen,
wobei die Steuerungseinrichtung eine Kontur der Plattform extrahiert, indem sie Bildverarbeitung für das Farben-Bild durchführt.

**12.** Messvorrichtung nach einem der Ansprüche 9 bis 11, wobei

die Standardabmessungs-Informationen eine Standard-Breite und Standard-Tiefe der Plattform einschließen,
die Steuerungseinrichtung eine Breite und eine Tiefe der Plattform anhand der geschätzten Kontur der Plattform auf Basis der dreidimensionalen Koordinaten-Informationen berechnet und die berechnete Breite und Tiefe mit der Standard-Breite und der Standard-Tiefe vergleicht, einen Typ der Plattform identifiziert und die Breite sowie Tiefe der Plattform schätzt.

**13.** Messvorrichtung nach Anspruch 12, wobei die Steuerungseinrichtung als eine Höhe der Last einen höchsten Punkt schätzt, an dem eine mittels der dreidimensionalen Koordinaten-Informationen und der Ebenengleichung der Bodenfläche berechnete Höhe eines Punktes in einem dreidimensionalen Raum am höchsten ist, wobei die geschätzte Plattform als eine Bodenebene angenommen wird.

**14.** Messvorrichtung nach Anspruch 3, die des Weiteren eine Kamera (160) für sichtbares Licht umfasst, die das Objekt fotografiert und Farben-Informationen erzeugt, die ein Farben-Bild anzeigen,
wobei die Steuerungseinrichtung eine Kontur der Last erfasst, indem sie Bildverarbeitung für das Farben-Bild durchführt, und als eine Höhe der Last einen höchsten Punkt schätzt, an dem eine mittels der dreidimensionalen Koordinaten-Informationen und der Ebenengleichung der Bodenfläche berechnete Höhe eines Punktes innerhalb der erfassten Kontur am höchsten ist.

15. Messverfahren zum Messen einer Größe einer äußeren Form eines Objektes, wobei das Objekt eine auf einer Bodenfläche vorhandene Plattform sowie eine auf die Plattform aufgesetzte Last einschließt und das Messverfahren umfasst:

einen Schritt zum Erfassen von Tiefen-Informationen, die Abstände von einer Bezugsposition zu der Bodenfläche und dem Objekt anzeigen;
einen Schritt zum Erfassen von Standardabmessungs-Informationen, die eine Standardgröße der Plattform anzeigen;
einen Schritt zum Messen von Breiten-, Tiefen- und Höhenabmessungen des Objektes durch Identifizieren der Plattform auf Basis der Tiefen-Informationen sowie der Standardabmessungs-Informationen sowie zum Erzeugen von Messungs-Informationen, die die bei dem Messen gemessenen Breiten-, Tiefen- und Höhenabmessungen anzeigen; sowie
einen Schritt zum Ausgeben der bei dem Erzeugen erzeugten Messungs-Informationen.

## Revendications

1. Dispositif de mesure (100) qui mesure la taille de la forme externe d'un objet (200), l'objet incluant une plate-forme (210) se trouvant sur la surface d'un sol et une charge (220) placée sur la plate-forme, le dispositif de mesure comprenant :

une unité d'acquisition (120) qui acquiert des informations de profondeur indiquant des distances à la surface du sol et à l'objet à partir d'une position de référence,
une mémoire (140) qui stocke des informations de dimensions standard indiquant une taille standard de la plate-forme,
un contrôleur (130) qui mesure les dimensions de largeur, de profondeur et de hauteur de l'objet en identifiant la plate-forme sur la base des informations de profondeur et des informations de dimensions standard, et qui génère des informations de mesure indiquant les dimensions mesurées de largeur de profondeur et de hauteur, et
une unité de sortie (111) qui délivre en sortie les informations de mesure.

2. Dispositif de mesure selon la revendication 1, dans lequel l'unité d'acquisition inclut un appareil de prise de vues de profondeur (120) qui photographie la surface du sol et l'objet en tant qu'informations de profondeur, qui génère une image de profondeur indiquant les distances à la surface du sol et à l'objet à partir de la position de référence en tant que valeur de profondeur pour chaque pixel.

3. Dispositif de mesure selon la revendication 2, dans lequel le contrôleur génère des informations de coordonnées tridimensionnelles obtenues en convertissant chaque pixel de l'image de profondeur en œuvre. Dans un système de coordonnées tridimensionnelles, qui calcule une équation de plan de la surface du sol sur la base des informations de coordonnées tridimensionnelles.

4. Dispositif de mesure selon la revendication 3, dans lequel le contrôleur estime qu'une zone de proximité de côté inférieur d'une taille prédéterminée dans l'image de profondeur représente une zone de la surface du sol, et il calcule l'équation de plan de la surface du sol à partir d'un point situé dans la zone de proximité de côté inférieur.

5. Dispositif de mesure selon la revendication 3, dans lequel le contrôleur estime une zone de la surface du sol sur la base de l'orientation d'un vecteur normal calculé à partir d'une pluralité de points et de la distance entre la pluralité de points, et il calcule l'équation de plan de la surface du sol à partir des points dans la zone estimée de la surface du sol.

6. Dispositif de mesure selon la revendication 3, comprenant en outre un appareil de prise de vues en lumière visible (160) qui photographie l'objet et génère des informations de couleurs indiquant une image en couleurs,
dans lequel le contrôleur estime une zone de la surface du sol sur la base des informations de couleurs, et il calcule l'équation de plan de la surface du sol à partir des points dans la zone estimée de la surface du sol.

7. Dispositif de mesure selon la revendication 3, comprenant en outre un capteur d'accélération (170) qui détecte une accélération gravitationnelle,

dans lequel le contrôleur calcule l'équation de plan de la surface du sol sur la base de l'orientation d'un vecteur normal de la surface du sol, le vecteur normal étant estimé sur la base de l'accélération gravitationnelle et sur la base des informations de coordonnées tridimensionnelles.

8. Dispositif de mesure selon la revendication 3, dans lequel le contrôleur calcule des vecteurs normaux de points correspondant à des pixels dans l'image de profondeur sur la base des informations de coordonnées tridimensionnelles, estime, comme plan horizontal, des points comportant des vecteurs normaux dans lesquels les vecteurs normaux calculés se trouvent à l'intérieur d'une certaine plage d'angles par rapport à un vecteur normal virtuel prédéterminé, estime une zone de la surface du sol sur la base des vecteurs normaux dans le plan horizontal estimé et des informations de coordonnées tridimensionnelles et calcule l'équation de plan de la surface du sol à partir des points dans la zone estimée de la surface du sol.

9. Dispositif de mesure selon la revendication 3, dans lequel :

les informations de dimensions standard incluent une hauteur standard de la plate-forme, et
le contrôleur calcule la hauteur de chaque point sur la base de coordonnées tridimensionnelles de chaque point et de l'équation de plan de la surface du sol, et il estime un contour de la plate-forme sur la base d'un point où la hauteur calculée est proche de la hauteur standard.

10. Dispositif de mesure selon la revendication 3, dans lequel :

les informations de dimensions standard incluent une hauteur standard de la plate-forme, et
le contrôleur calcule les vecteurs normaux de points correspondant à des pixels respectifs dans l'image de profondeur sur la base des informations de coordonnées tridimensionnelles, détecte un plan dans lequel les orientations des vecteurs normaux calculés sont dans la même direction, calcule les hauteurs des points respectifs sur la base de l'équation de plan de la surface du sol et estime, en tant que contour de la plate-forme, une partie dans laquelle la hauteur calculée dans le plan détecté est proche de la hauteur standard.

11. Dispositif de mesure selon la revendication 3, comprenant en outre un appareil de prise de vues en lumière visible qui photographie l'objet et génère des informations de couleurs indiquant une image en couleurs,
dans lequel le contrôleur extrait un contour de la plate-forme en effectuant un traitement d'image sur l'image en couleurs.

12. Dispositif de mesure selon l'une quelconque des revendications 9 à 11, dans lequel :

les informations de dimensions standard incluent une largeur standard et une profondeur standard de la plate-forme,
le contrôleur calcule une largeur et une profondeur de la plate-forme à partir du contour estimé de la plate-forme sur la base des informations de coordonnées tridimensionnelles, et il compare la largeur et la profondeur calculées à la largeur standard et à la profondeur standard, il identifie un type de plate-forme et estime la largeur et la profondeur de la plate-forme.

13. Dispositif de mesure selon la revendication 12, dans lequel le contrôleur estime, en tant que hauteur de la charge, le point le plus haut où la hauteur d'un point, calculée par les informations de coordonnées tridimensionnelles et l'équation de plan de la surface du sol, est la plus haute dans un espace tridimensionnel, la plate-forme estimée étant prise en tant que plan de fond.

14. Dispositif de mesure selon la revendication 3, comprenant en outre un appareil de prise de vues en lumière visible (160) qui photographie l'objet et génère des informations de couleurs indiquant une image en couleurs,
dans lequel le contrôleur détecte un contour de la charge en effectuant un traitement d'image sur l'image en couleurs et estime, en tant que hauteur de la charge, le point le plus haut où la hauteur d'un point, calculée par les informations de coordonnées tridimensionnelles et l'équation de plan de la surface du sol, est la plus haute à l'intérieur du contour détecté.

15. Procédé de mesure permettant de mesurer la taille de la forme externe d'un objet, l'objet incluant une plate-forme se trouvant sur la surface d'un sol et une charge placée sur la plate-forme, le procédé de mesure comprenant :

une étape d'acquisition d'informations de profondeur indiquant des distances à la surface du sol et à l'objet à partir d'une position de référence,
une étape d'acquisition d'informations de dimensions standard indiquant une taille standard de la plate-forme,
une étape de mesure des dimensions de largeur, de profondeur et de hauteur de l'objet en identifiant la plate-forme sur la base des informations de profondeur et des informations de dimensions standard, et de génération d'informations de mesure indiquant les dimensions mesurées de largeur de profondeur et de hauteur, et
une étape de délivrance en sortie des informations de mesure générées lors de la génération.

# FIG. 1

# FIG. 2

# FIG. 3

100

MEASUREMENT DEVICE

150

COMMUNICATION UNIT

120

DEPTH CAMERA

140

STORAGE

130

CONTROLLER

112

OPERATION UNIT

111

DISPLAY UNIT

110

TOUCH SCREEN

# FIG. 4

# FIG. 5

141p

Y

X

# FIG. 6

MEASUREMENT DEVICE — 100

DEPTH CAMERA — 120

CONTROLLER — 130

STORAGE — 140

131 — COORDINATE CONVERTOR

141 — DEPTH INFORMATION

142 — THREE-DIMENSIONAL COORDINATE INFORMATION

132 — FLOOR SURFACE ESTIMATION UNIT

133 — PALLET ESTIMATION UNIT

143 — STANDARD DIMENSION INFORMATION

134 — HIGHEST POINT ESTIMATION UNIT

144 — MEASUREMENT INFORMATION

# FIG. 7

143

| TYPE OF PALLET | WIDTH (cm) | DEPTH (cm) | HEIGHT (cm) |
|:---:|:---:|:---:|:---:|
| I | 80 | 120 | 14 |
| II | 100 | 120 | 14 |
| III | 60 | 80 | 14 |

# FIG. 8

START

S1  ACQUIRE DEPTH INFORMATION (TWO-DIMENSIONAL COORDINATES AND DEPTH VALUE)

S2  GENERATE THREE-DIMENSIONAL COORDINATE INFORMATION FROM DEPTH INFORMATION BY COORDINATE CONVERSION

S3  ESTIMATE FLOOR SURFACE (GENERATE FLOOR SURFACE EQUATION)

S4  ESTIMATE WIDTH, DEPTH, AND POSITION OF PALLET

S5  ESTIMATE HEIGHT OF LOAD

S6  GENERATE AND OUTPUT MEASUREMENT INFORMATION

END

# FIG. 9

144

| WIDTH (cm) | DEPTH (cm) | HEIGHT (cm) |
|:---:|:---:|:---:|
| 100 | 120 | 95 |

# FIG. 10

# FIG. 11

START TO GENERATE FLOOR SURFACE EQUATION

S301 — ESTIMATE THAT LOWER SIDE PROXIMITY REGION OF DEPTH IMAGE IS REGION OF FLOOR SURFACE, AND SELECT THREE OR MORE PIXELS IN LOWER SIDE PROXIMITY REGION

S302 — CALCULATE NORMAL VECTOR (a, b, c)

S303 — CALCULATE CONSTANT (d) WHERE HEIGHT IS ZERO

END

# FIG. 12

141p

31

# FIG. 13

START TO ESTIMATE
PALLET

S401 | ACQUIRE STANDARD DIMENSION INFORMATION OF PALLET

S402 | IDENTIFY NEAREST POINT A IN PROXIMITY OF PALLET HEIGHT

S403 | IDENTIFY LEFT END POINT B AND RIGHT END POINT C AMONG POINTS WHICH CONTINUE FROM NEAREST POINT A IN PROXIMITY OF PALLET HEIGHT

S404 | COMPARE DISTANCE BETWEEN A AND B AND DISTANCE BETWEEN A AND C WITH PRESCRIBED DIMENSION INFORMATION AND IDENTIFY TYPE OF PALLET

S405 | IDENTIFY POINT D BASED ON IDENTIFIED TYPE OF PALLET AND ESTIMATE REGION OF PALLET

END

# FIG. 14

# FIG. 15

START TO ESTIMATE
HEIGHT OF LOAD

S501 — CALCULATE HEIGHT OF POINT FROM FLOOR SURFACE, POINT PRESENT IN SPACE WITH PALLET REGION TAKEN AS BOTTOM SURFACE

S502 — DETERMINE POINT WITH HIGHEST HEIGHT AS HEIGHT FROM FLOOR SURFACE

END

# FIG. 16

# FIG. 17A

210

213

215

215

214

# FIG. 17B

PALLET

A1

A2

214

# FIG. 18

START TO ESTIMATE
PALLET

S411 | CALCULATE NORMAL VECTORS IN DEPTH IMAGE AND DETECT PLANE IN WHICH CALCULATED NORMAL VECTORS ARE IN SAME ORIENTATION

S412 | ACQUIRE STANDARD DIMENSION INFORMATION OF PALLET

S413 | EXTRACT REGION WITH HEIGHT CLOSE TO PALLET HEIGHT IN DETECTED PLANE.

S414 | IDENTIFY NEAREST POINT A, LEFT END POINT B, AND RIGHT END POINT C

S415 | COMPARE DISTANCE BETWEEN A AND B AND DISTANCE BETWEEN A AND C WITH STANDARD DIMENSION INFORMATION AND IDENTIFY TYPE OF PALLET

S416 | IDENTIFY POINT D BASED ON IDENTIFIED TYPE OF PALLET AND ESTIMATE REGION OF PALLET

END

## FIG. 19

# FIG. 20

MEASUREMENT DEVICE 103

COMMUNICATION UNIT 150

STORAGE 140

CONTROLLER 130

DEPTH CAMERA 120

VISIBLE LIGHT CAMERA 160

OPERATION UNIT 112

DISPLAY UNIT 111

TOUCH SCREEN 110

# FIG. 21

START

S21    ACQUIRE DEPTH INFORMATION (TWO-DIMENSIONAL COORDINATES AND DEPTH VALUE)

S22    GENERATE THREE-DIMENSIONAL COORDINATE INFORMATION FROM DEPTH INFORMATION BY COORDINATE CONVERSION

S23    ACQUIRE COLOR INFORMATION (TWO-DIMENSIONAL COORDINATES AND RGB VALUE)

S24    DETECT CONTOUR OF OBJECT (PALLET AND LOAD) FROM COLOR INFORMATION

S25    ESTIMATE FLOOR SURFACE (GENERATE FLOOR SURFACE EQUATION)

S26    ESTIMATE WIDTH, DEPTH AND POSITION OF PALLET

S27    ESTIMATE HEIGHT OF LOAD

S28    GENERATE AND OUTPUT MEASUREMENT INFORMATION

END

# FIG. 22

# FIG. 23

```
        ( START TO GENERATE FLOOR )
        (    SURFACE EQUATION     )
                    |
S2501   | OUTSIDE CONTOUR OF OBJECT, ESTIMATE FLOOR SURFACE REGION |
        |          BASED ON COLOR INFORMATION                     |
                    |
S2502   | SELECT THREE OR MORE PIXELS IN ESTIMATED FLOOR SURFACE  |
        |                      REGION                             |
                    |
S2503   |         CALCULATE NORMAL VECTOR (a, b, c)               |
                    |
S2504   |      CALCULATE CONSTANT (d) WHERE HEIGHT IS ZERO        |
                    |
                 (  END  )
```

# FIG. 24

```
          ┌─────────────────────┐
          │  START TO ESTIMATE  │
          │       PALLET        │
          └─────────────────────┘
                     │
┌──────────────────────────────────────────────────────┐
│ CALCULATE DIMENSIONS OF PALLET BASED ON CONTOUR OF     │
│ OBJECT AND THREE-DIMENSIONAL COORDINATE INFORMATION    │
└──────────────────────────────────────────────────────┘
S2601
                     │
┌──────────────────────────────────────────────────────┐
│ COMPARE CALCULATED DIMENSIONS AND STANDARD DIMENSION   │
│ INFORMATION WITH EACH OTHER AND ESTIMATE REGION OF     │
│ PALLET                                                 │
└──────────────────────────────────────────────────────┘
S2602
                     │
          ┌─────────────────────┐
          │         END         │
          └─────────────────────┘
```

# FIG. 25

```
          ┌─────────────────────┐
          │  START TO ESTIMATE  │
          │    HEIGHT OF LOAD   │
          └─────────────────────┘
                     │
┌──────────────────────────────────────────────────────┐
│   CALCULATE HEIGHTS OF POINTS IN CONTOUR OF OBJECT     │
└──────────────────────────────────────────────────────┘
S2701
                     │
┌──────────────────────────────────────────────────────┐
│ DETERMINE POINT WITH HIGHEST HEIGHT AS HEIGHT FROM     │
│ FLOOR SURFACE                                          │
└──────────────────────────────────────────────────────┘
S2702
                     │
          ┌─────────────────────┐
          │         END         │
          └─────────────────────┘
```

# FIG. 26

104

MEASUREMENT DEVICE

150
COMMUNICATION UNIT

120
DEPTH CAMERA

140
STORAGE

130
CONTROLLER

170
ACCELERATION SENSOR

112
OPERATION UNIT

111
DISPLAY UNIT

110
TOUCH SCREEN

# FIG. 27

START TO GENERATE FLOOR
SURFACE EQUATION

S341 | ACQUIRE GRAVITATIONAL ACCELERATION INFORMATION

S342 | ESTIMATE VERTICAL UPWARD NORMAL VECTOR (a, b, c) FROM
GRAVITATIONAL ACCELERATION INFORMATION

S343 | CALCULATE RELATIVE HEIGHT OF POINT FROM THREE-DIMENSIONAL
COORDINATE INFORMATION AND NORMAL VECTOR

S344 | ESTIMATE POINT WITH LOWEST HEIGHT AS FLOOR SURFACE AND
CALCULATE CONSTANT (d)

END

# FIG. 28

```
          ┌─────────────────────────────┐
          │ START TO GENERATE FLOOR     │
          │    SURFACE EQUATION         │
          └─────────────────────────────┘
                        │
┌──────┐  ┌─────────────────────────────────────────────────────┐
│ S351 │  │              SET VIRTUAL NORMAL                     │
└──────┘  └─────────────────────────────────────────────────────┘
                        │
┌──────┐  ┌─────────────────────────────────────────────────────┐
│ S352 │  │ CALCULATE LOCAL NORMAL VECTOR BASED ON THREE-       │
│      │  │ DIMENSIONAL COORDINATE INFORMATION                  │
└──────┘  └─────────────────────────────────────────────────────┘
                        │
┌──────┐  ┌─────────────────────────────────────────────────────┐
│ S353 │  │ ESTIMATE, AS HORIZONTAL PLANE, POINTS HAVING       │
│      │  │ NORMALS WITHIN CERTAIN ANGLE RANGE WITH RESPECT    │
│      │  │ TO VIRTUAL NORMAL                                   │
└──────┘  └─────────────────────────────────────────────────────┘
                        │
┌──────┐  ┌─────────────────────────────────────────────────────┐
│ S354 │  │ CALCULATE AVERAGE OF NORMAL VECTORS IN ESTIMATED   │
│      │  │ HORIZONTAL PLANE AS NORMAL VECTOR (a, b, c)        │
└──────┘  └─────────────────────────────────────────────────────┘
                        │
┌──────┐  ┌─────────────────────────────────────────────────────┐
│ S355 │  │ CALCULATE RELATIVE HEIGHT FROM THREE-DIMENSIONAL    │
│      │  │ COORDINATE INFORMATION AND NORMAL VECTOR (a', b',   │
│      │  │ c'), AND ESTIMATE LOW REGION AS FLOOR SURFACE      │
└──────┘  └─────────────────────────────────────────────────────┘
                        │
┌──────┐  ┌─────────────────────────────────────────────────────┐
│ S356 │  │ CALCULATE AVERAGE OF NORMAL VECTORS IN ESTIMATED   │
│      │  │ FLOOR SURFACE AS NORMAL VECTOR (a, b, c)           │
└──────┘  └─────────────────────────────────────────────────────┘
                        │
┌──────┐  ┌─────────────────────────────────────────────────────┐
│ S357 │  │ RECALCULATE HEIGHT FROM THREE-DIMENSIONAL           │
│      │  │ COORDINATE INFORMATION AND NORMAL VECTOR (a, b, c), │
│      │  │ ESTIMATE LOW REGION AS FLOOR SURFACE AND            │
│      │  │ CALCULATE CONSTANT (d)                              │
└──────┘  └─────────────────────────────────────────────────────┘
                        │
                  ┌───────────┐
                  │    END    │
                  └───────────┘
```

**REFERENCES CITED IN THE DESCRIPTION**

**Patent documents cited in the description**

- JP 2017191605 A
- WO 2016199366 A